(19)

Europäisches
Patentamt
European
Patent Office
Office européen
des brevets

(11) **EP 4 459 523 A1**

(12) **EUROPEAN PATENT APPLICATION**

(43) Date of publication:
**06.11.2024 Bulletin 2024/45**

(21) Application number: **24173966.3**

(22) Date of filing: **02.05.2024**

(51) International Patent Classification (IPC):
***G06Q 10/04*** *(2023.01)*   ***A01B 79/00*** *(2006.01)*
***G06Q 50/02*** *(2024.01)*

(52) Cooperative Patent Classification (CPC):
**G06Q 10/04; A01B 79/005; G06Q 50/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.05.2023  IT 202300008580**

(71) Applicants:
• **Universita' Degli Studi di Siena
  53100 Siena (IT)**
• **Universita' Degli Studi Della Tuscia
  01100 Viterbo (IT)**

(72) Inventors:
• **DETTI, Paolo
  00176 Rome (IT)**
• **BLASI, Emanuele
  00162 Rome (IT)**
• **BENINI, Marco
  53100 Siena (IT)**
• **FOSCI, Lorenzo
  01020 Bomarzo (IT)**

(74) Representative: **ABM Agenzia Brevetti & Marchi
Viale Giovanni Pisano, 31
56123 Pisa (IT)**

(54) **A CROP ROTATION AND SCHEDULING METHOD IN A SUSTAINABLE AGRICULTURE SCENARIO**

(57)    A method for planning crop rotations in at least one plot ($h_i$, i=1...n) of land within a predetermined planning horizon or time (T), to implement a cropping method, includes the steps of: for said or each plot (h), determination of a set (C) of acceptable crops (c) based on the soil nature of the plot(s) (h), an availability of irrigation, exposure, and geographic coordinates; for said or each plot (h), definition of a succession of planting periods (t) until the planning horizon (T) is completed; specification of a plurality of desired crops ($c_i$) among the acceptable crops; choice of a σ sequence of k crops, where k≥2, among the desired crops ($c_i$, i=1...k); definition of a plurality of eligible sequences σ of the desired crops $c_i$ to be assigned to plot h, according to respective predetermined time orders, subject to agronomic constraints including on each plot, uniqueness of the crop c to be assigned in each planting period t, and minimum and maximum area assigned to each crop c in each planting period t; determination, for each of the eligible sequences σ, and for all p sowing periods t of planning time T, of a total yield $\pi_h$ for said or each plot h, obtained as the sum of seasonal yields $Y_h$ in sowing periods t, in which each of the seasonal yields in a sowing period t is calculated based on a maximum number of crops k comprising the assigned crop in sowing period t, and the k-1 assigned crops, according to each of the sequences, in a corresponding k-1 number of consecutively preceding earlier sowing periods preceding said sowing period (Figure 1).

**Fig. 1**

**Description**

Field of the invention

The present invention concerns the planning of crop rotation in agricultural land. Crop rotation consists of the succession of different crops on a same plot of land in consecutive planting periods and has traditionally served the purpose of preventing problems caused by monoculture practices, as well as the more recent purpose of pursuing sustainable agriculture goals.

In fact, monoculture schemes, in which the same crop is assigned to the entire farmland in each planting period of a given planning horizon, lead to problems, mainly, of loss of soil fertility and yield and an increase in weeds and pests, to counteract which it becomes necessary to use significant amounts of fertilizers, herbicides and pesticides, increasing production costs and potential environmental damage.

These problems have been the subject of a great deal of research, and more sustainable cropland use models have been proposed, inspired by the principles of agroecology and applying appropriate crop rotation.

In this context, the invention refers to a method for scheduling such a succession over a predetermined time, comprising multiple planting periods, referred to as a planning horizon.

Technical problems

As is well known, crops are classified into three types for the purpose of rotation planning:

-   renewing crops, such as corn, sugar beet, potato, tomato, sunflower, which require specific soil preparation and balanced organic fertilization, with a positive effect on soil structure;
-   Depleting crops, such as wheat, oats, barley, rye, rice, maize, sorghum, and generally grain cereals, which exploit nutrients in the soil and deplete it; and
-   Improving crops, which increase soil fertility by enriching it with nutrients. Improving crops are mainly legumes, such as alfalfa or clover, which can fix atmospheric nitrogen.

In the Mediterranean soil and climate context, any succession of three consecutive crop types that does not result in a loss of yield and soil fertility is called a "best crop rotation practice." The most classic of crop rotation best practices in the Mediterranean context is the succession of renewing, depleting and improving crops, in that order. However, there are also other rotation practices that are considered the best, as long as they do not produce a loss of yield and soil fertility.

Another aspect of crop rotation is maximum replanting, i.e., the number of times a given crop family can be repeated in a crop rotation scheme in a given period of time. In fact, although it verifies an increase in costs when crop rotation does not follow best rotation practices, crops cannot be replanted indefinitely on the same land if their succession is not interrupted by other crops, even when this solution is technically feasible.

In recent years, these general agronomic principles of crop rotation have been complemented by sustainability regulations that have the character of legal constraints, such as recent Common Agricultural Policy (CAP) requirements, or that derive from private supply chain initiatives, or Sustainable Value Chain (SVC) initiatives such as Barilla's "Carta del Mulino" (CdM, Mill's Charter), whose purpose is to promote virtuous agricultural practices in respect of environmental sustainability by providing incentives for farmers who adhere to it.

"Pure" farmers, i.e., not involved in any of these regulations define crop rotation based on agronomic knowledge, technical characteristics and machinery, and have the main purpose of maximizing income and maintaining land capital.

Instead, farmers involved in regulations such as those of the CAP receive incentives based on requirements related to environmental and climate issues. Specifically, the CAP imposes diversification constraints on the minimum number of crops to be grown on a plot in each planting season and on the percentage area allocated to one or more crops, relative to the arable area, as well as prescribing percentages of Ecological Focus Areas (EFAs) with features related to landscapes, pastures, or crops to enhance biodiversity. These constraints prevent the adoption of certain crop plans that are particularly profitable for farmers, which is why the CAP provides economic incentives to compensate for possible consequent profit losses.

Farmers who join the above private supply chain initiatives, with respect to crop diversification, biodiversity and the pursuit of overall sustainability goals, receive additional premiums for specific crops. For example, the Carta del Mulino imposes constraints on the crops to be grown on a given plot during the four planting periods following the cultivation of a promoted crop designated as "CdM," such as: greening constraints, which require at least one legume or oilseed crop to be grown in the four periods; diversification constraints, which require at least two different crops to be grown in those periods; and repetition constraints, which prescribe a limit of only one repetition among the crops grown in that plot in the sequence of five crops that include the CdM and the next four. A minimum of 3 percent of the agricultural area devoted to wheat must be cultivated with flowers.

The foregoing outlines a very complicated picture of the variables that need to be taken into account when planning crop rotation in agricultural lands, with the goal of ensuring maximum yield while complying with requirements of multiple natures.

Prior Art

Several authors have proposed specific scheduling approaches to solve crop planning and rotation problems.
Haneveld and Stegeman (Crop succession requirements in agricultural production planning, European Journal of Operational Research, 166(2), 406-429, 2005) proposed linear programming models for agricultural production planning with crop rotation constraints, in which crop succession information is provided only in the form of a set of ineligible crop successions. The decision variables represent the areas in which a certain eligible sequence of crops is grown.
Other works attempt to solve the Crop Rotation Problem (CRP) in different soil and climate contexts using column generation approaches. Alfandari et al. (A MIP flow model for crop-rotation planning in a context of sustainable forest development. Annals of Operations Research, 190(1), 149-164, 2011) present a crop-rotation planning problem in the context of Madagascar, where minimization of crop space contributes to long-term sustainable primary forest development. An integer linear programming model is proposed for the problem, in which a plot can be cultivated with several crops in the same period, with the goal of minimizing the total area under cultivation. The same authors (A branch-and-price-and-cut approach for sustainable crop rotation planning, European Journal of Operational Research, Volume 241, Issue 3, 872-879, 2015) with reference to a limited number of rotation schemes, present a fully combinatorial crop planning problem in which a single crop can be grown on each plot in each period. An integer linear programming formulation and a graph formulation are given, and a branch-and-price-and-cut approach is adopted to solve the problem of minimizing the cultivated area required to meet demand constraints.
In Santos et al. (A branch-price-and-cut method for the vegetable crop rotation scheduling problem with minimal plot sizes, European Journal of Operational Research, Volume 245, No. 2, 581-590, 2015) an integer linear scheduling model is presented to find the minimum land needed to meet crop demand. Crop rotation is considered only by imposing a green manure crop and a fallow period in the crop schedules. Binary variables and allocation constraints are used to model crop programs on individual plots of land and integer variables are adopted to minimize the total number of base-area plots allocated to different programs. A branch-and-price-and-cut approach is presented that can solve cases with up to 20 crops and a planning horizon of 2 years.
Santos, Costa et al. (Sustainable vegetable crop supply problem, European Journal of Operational Research, Volume 204, Issue 3, 639-647, 2010) for a Brazilian soil and climate context, also proposed a binary linear programming model to solve the Crop Rotation Scheduling Problem (CRSP) with the objective of maximizing plot occupancy considering demand constraints. The authors proposed a column generation procedure to solve the model. However, the authors do not propose consecutive replantings, and for rotations, green manure crops and fallow periods are forced into the cropping sequence. Therefore, the yield of a crop does not depend on previous crops but is static.
A similar procedure was also used in Santos, Michelon et al. (Crop rotation scheduling with adjacency constraints, Annals OR, 190, 165-180, 2011) to solve a variant of CRSP without demand constraints. In this case, the authors were the first to introduce adjacency constraints for CRSP, preventing crops of the same botanical family from being grown simultaneously in neighboring plots.
In Munari (Improved mathematical model and bounds for the crop rotation scheduling problem with adjacency constraints, European Journal of Operational Research, Volume 278, Issue 1, 120-135, 2019) a crop rotation scheduling problem in the Brazilian area is addressed, with the objective of maximizing plot occupancy and profit while taking adjacency constraints into account. The authors propose improvements to the mathematical model presented by Santos and Michelon, see above, and a detailed set of cases based on real data. To find bounds and solutions for the improved model, five different relaxation approaches are proposed. The results show improvements over the model proposed by Santos and Michelon.
In Fikry et al. (A New Mathematical Model for the Deterministic Crop Rotation Planning Problem, IEEE Int. Conf. on Ind. Eng. and Eng. Man. (IEEM), 314-318, 2019) integer linear programming models are presented to assign crops to plots and planting periods with the goal of maximizing total yield. Crop rotation is done simply by prohibiting two crops of the same family from being planted consecutively. The models described have the limitation that the yield obtained from each crop is considered static, that is, it does not take into account the succession of previous crops grown on the same plot of land. In particular, the soil and climate context is referred to Egypt, and no consecutive replantings are proposed. Homogeneous plots of standard size are chosen for the study. Regarding rotation, a minimum number of legumes and forced fallow periods in cropping sequences are proposed. Again, the yield of a crop does not depend on previous crops, but is static.
Boyabatli et al. (Crop Planning in Sustainable Agriculture: Dynamic Farmland Allocation in the Presence of Crop Rotation Benefits, Management Science, 65, (5), 2060-2076, 2019) proposed a stochastic dynamic program model for crop planning in sustainable agriculture, taking into account crop rotation issues. However, only the succession of two crops, corn and soybean, is considered in the study.

Detlefsen and Jensen (Modeling optimal crop sequences using network flows, Agricultural Systems, 94(2), 566-572, 2007) consider the problem of finding an optimal crop rotation for a given crop selection on a given plot. The problem is modeled and solved as a flow problem on minimum-cost networks, considering sequences of up to three crops.

Bachinger and Zander (A tool for generating and evaluating crop rotations for organic farming systems, European Journal of Agronomy, 26(2), pp. 130-143, 2007) present a decision-support tool called ROTOR, a static rule-based model in which a set of annual crop production activities is assembled in a semi-automatic way. However, ROTOR does not include the benefits of crop rotation in the decision-making process; rather, it allows only a static "what if" analysis to be performed.

Filippi et al. (Mixed integer linear programming models for optimal crop selection, Computers & Operations Research, Volume 81, 26-39, 2017) addressed the problem of crop mix selection with the goal of maximizing the farmer's profit by focusing on the work steps and related costs associated with each crop, rather than crop rotation issues. The authors develop a first integer programming model for solving the farmer's profit maximization problem by setting cost and price values as historical averages, and a second integer programming model in which the farmer's risk aversion is considered, using Conditional Value-at-Risk maximization as the objective function, and looking for the crop mix that maximizes the average expected profit under a predefined quantile of worst-case realizations. Specifically, a crop mix is proposed to be chosen based on the machinery and activities required to produce them, without considering either replanting constraints or rotation principles, and without tying yield to crop sequence.

US20110276336 A1 describes a method of allocating land to crops that takes into account the growth needs of the crops themselves (including seasonality), the costs associated with them, and the amount of harvest required.

EP3996013 A1 describes a method of optimizing agricultural strategies based on environmental sustainability characteristics, taking into account yields and associated costs, as well as crop characteristics such as irrigation, soil characteristics.

WO2022146332 A1 describes a method of optimizing Agricultural strategies based on crop characteristics (types, growing needs and timing, climate and soil type), profit (expected yields, prices) such that land allocation to specific crop types is defined to maximize profit.

CN108805349A describes a method of land allocation to specific crops, and optimization of derived strategies, based on (i) type of crops; (ii) their relative needs, including seasonality, climatic characteristics and soil composition; (iii) expected yield; computational simplicity.

US2021257113 A1 describes a method of optimizing agricultural strategies to allocate land to specific crops based on (i) types of crops; (ii) their growth specificity, including climatic and soil characteristics; (iii) expected yield; and (iv) sustainability of the strategy.

Summary of the invention

It is an object of the present invention to provide a method for planning crop rotations in plots of arable land within a predetermined time horizon that, subject to general agronomic principles of crop rotation, and possibly also subject to specific special prescriptions of sustainable crop agriculture, will achieve the highest possible yield for each plot.

These and other purposes are achieved by a method of cultivating at least one plot h of a set of plots H of land within a predetermined planning horizon or time T, as defined by independent claim 1.

According to one aspect of the invention, such a cultivation method includes a step of planning rotations of said crops, obtaining a rotation plan, and a step of executing said crops according to said rotation plan, wherein said planning step includes the further steps of:

- for said or each plot h, determination of a set C of acceptable crops c for said plot;
- for said or each plot h, definition of a succession of p planting periods t until said planning time T;
- definition of a plurality of desired crops c; among said acceptable crops;
- definition of a plurality of permissible sequences $\sigma$ of said desired crops $c_i$ to be assigned, according to respective predetermined time orders, to said or each plot h, the permissible sequences $\sigma$ being determined in compliance with agronomic constraints comprising:

  - on each plot, uniqueness of crop c to be allocated in each sowing period t;
  - minimum and maximum area allocated to each crop c in each planting period t;
  - determination, for each of said eligible sequences $\sigma$, and for all p sowing periods t of planning time T, of a total yield $\pi_h$ for said or each plot h, obtained as the sum of seasonal yields Yn in said sowing periods t, according to the formula

$$\pi_h(\sigma) = \sum_{c \in \sigma} Y_h(\langle \sigma_k(c) \rangle, t(c)), \qquad (1)$$

wherein each of the seasonal yields in a planting period t is calculated based on a maximum number of crops k that includes:

- the crop assigned in sowing period t, and
- the k-1 crops assigned, according to each of these sequences, in a corresponding k-1 number of consecutively preceding earlier planting periods for that planting period,
  where $k \geq 2$;

- selecting, from among said allowable sequences, a planning sequence for which said total yield $\pi_h$ has a maximum value, said planning sequence providing said rotation plan.

In this way, the total yield for said or each plot h is calculated as the sum of seasonal yields referring to individual planting periods, taking into account at least two previous crops in each plot h. In particular, seasonal contributions to the total yield were found to provide a substantially accurate estimate of the actual yield, while considering, for each seasonal yield, the effects of a predetermined limited number of crops preceding that of the planting period to which the seasonal yield refers. This allows greater precision for yield determination than prior technique methods and, at the same time, a containment of the computational burden and, thus, allows the result, which is a yield-maximizing crop schedule for each plot for all planting periods of a predetermined time horizon.

Thus, the method differs from the procedures described in the prior art papers above, particularly Santos, Costa et al., and Fikry et al. in that it considers the dependence of the yield of a crop, or a plurality of crops made in the plot, in consecutive growing periods on a predetermined number of crops made in that plot in previous growing periods, in other words, the yield of a crop is not static but dynamic. In contrast, in Santos, Costa et al., and in Fikry et al., only the current crops are taken into account for yield calculation, i.e., using the terminology of the present invention, it would be k=1.

Advantageous different embodiments of this method are defined by the dependent claims.

In particular,

- desired crops include winter or summer seasonal crops of duration $d_c$ and annual crops of duration $2d_c$,
- planting periods include a plurality of odd winter planting periods alternating with a plurality of even summer planting periods, and
- $\sigma$ eligible sequences are determined in compliance with additional agronomic constraints including at least one constraint selected among:

  - assignment of a winter crop or annual crop to each of the odd/even planting periods, where the annual crop is also assigned to an odd/even planting period consecutive to a respective odd/even planting period of assignment, or
  - if an annual crop c is assigned to a planting period t but not to the immediately preceding period t -1, assignment of the annual crop also to the periods {t, t +1, ..., 2dc -2}, so as to respect the duration $2d_c$ of the annual crop.

In particular, $\sigma$ test sequences are determined in compliance with an additional agronomic constraint consisting of a maximum number of consecutive repetitions, in the same plot, of one or more crops from the same homogeneous replanting group, the maximum number being equal to a maximum replanting value characteristic of the group.

In particular, k is selected among 2, 3 and 4. More specifically, k =3.

In particular, k =2 and the total yield $\pi_h$ for each plot h is expressed by the formula

$$\pi_h(\sigma) = Y_h(\langle c_1 \rangle, 1) + Y_h(\langle c_1, c_2 \rangle, 3) + Y_h(\langle c_2, c_1 \rangle, 5) + Y_h(\langle c_1, c_2 \rangle, 7) + Y_h(\langle c_2, c_1 \rangle, 9) + Y_h(\langle c_1, c_2 \rangle, 11) + \ldots$$

wherein each additional addend refers to an additional odd-seeded period, and contains a yield in the odd-seeded period dependent on a portion of the sequence of $\sigma$ that contains the assigned crop c in the additional period and the k-1=1 crops immediately preceding c.

In particular, k =3 and the total yield $\pi_h$ for each plot h is expressed by the formula

$$\pi_h(\sigma) = Y_h(\langle c_1 \rangle, 1) + Y_h(\langle c_1, c_2 \rangle, 3) + Y_h(\langle c_1, c_2, c_3 \rangle, 5) + Y_h(\langle c_2, c_3, c_4 \rangle, 7) +$$
$$Y_h(\langle c_3, c_4, c_1 \rangle, 9) + Y_h(\langle c_4, c_1, c_2 \rangle, 11) + \ldots$$

wherein each additional addend refers to an additional odd-seeded period, and contains a yield in the odd-seeded period dependent on a portion of the sequence of $\sigma$ containing the assigned crop c in the additional period and the $k-1=2$ crops immediately preceding c.

In particular, $k = 4$ and the total yield $\pi_h$ for each plot h is expressed by the formula

$$\pi_h(\sigma) = Y_h(\langle c_1 \rangle, 1) + Y_h(\langle c_1, c_2 \rangle, 3) + Y_h(\langle c_1, c_2, c_3 \rangle, 5) + Y_h(\langle c_1, c_2, c_3, c_4 \rangle, 7)$$
$$+ Y_h(\langle c_2, c_3, c_4, c_5 \rangle, 9) + Y_h(\langle c_3, c_4, c_5, c_1 \rangle, 11) + \ldots$$

wherein each additional addend refers to an additional odd-seeded period, and contains a yield in the odd-seeded period dependent on a portion of the sequence of $\sigma$ containing the assigned crop c in the additional period and the $k-1=3$ crops immediately preceding c.

In particular, the step of selecting is performed as a minimum-cost network flow problem between a source node and a demand node of a graph (G).

In particular, the step of selecting is performed as an integer linear programming problem.

Brief description of the drawings

The invention will be illustrated below with a description of some embodiments, made by way of example and not limitation, with reference to the attached drawings, in which:

- Figure 1 schematically shows the principle of crop rotation;
- Figure 2 shows a graph for solving a 3-crop rotation planning problem with a 3-year planning horizon as a minimum-cost network flow problem, in a simplified case in which there are no constraints on the minimum and maximum area to be allocated to each crop in each period, and in which the maximum replanting for each group and the duration of each annual crop there is at most 2;
- Figures 3 and 4 show in tabular form the solution of two rotation planning problems, according to the invention, in two different farmlands.

Description of embodiment forms of the invention

A problem of scheduling crop rotation on plots of farmland can be set up in the way described below.

In this description, a farmland is considered as a set of m elementary plots $H = \{1, ..., m\}$ to be cultivated. Each plot h has a size $s_h$ and is assumed to be nondecomposable into subplots of smaller size.

In general, plots can have different characteristics for the same crops, in terms of yields and thus costs and gains. This depends on factors such as soil fertility, irrigation, land conformation, and others. Two plots are considered homogeneous if they have the same size and economic values for the same crops.

Let $C = \{c_1, c_2, ..., c_n\}$ be the set of crops available to be sown on farmland plots during a planning horizon $T = \{1, ..., p\}$ consisting of p planting periods. In each planting period, a plot can be assigned to a maximum of one crop.

Referring to the European context, each agricultural year is divided into a first fall semester, typically beginning in October, devoted to winter crops and a second spring semester, typically beginning in April, devoted to summer crops. Odd or even periods in T indicate the first or second semester of a year, respectively.

In this description, we denote by $T_o$ the set of odd periods and by $T_e$ the set of even periods in T, with $T = T_e \cup T_o$. Note that the last period p in T is an even period. Crops in C are classified according to their planting periods and time requirements as annual, first-semester and second-semester crops. Let $C = C_A \cup C_F \cup C_S$ be the disjoint set of crops $C_A$, $C_F$ and $C_S$ that are annual, first-semester and second-semester crops, respectively. The three sets are formally defined in the following. The annual crops of $C_A$ can be sown only in the periods of the first semester $t \in T_o$, and they must remain in the soil even in the relevant second semester $t + 1 \in T_e$. In addition, each annual crop $c \in C_A$ has a duration $d_c$ ($2d_c$) indicating the number of years (sowing periods) it must remain on the ground. First-semester crops of $C_F$ can only be sown at the beginning of a first sowing period $t \in T_o$ and are harvested at the end of the same sowing period or semester. Finally, second-semester crops of Cs can only be sown in a second-semester period $t \in T_e$ and only on plots where a crop in $C_F$ was grown in the first semester $t - 1 \in T_o$.

Given a crop $c \in C$ and a period $t \in T$, c and t are said to be compatible if t is a possible planting period for c. It is assumed that a crop in C must always be assigned to each odd period $t \in T_o$ on each plot. Fallow periods can be modeled simply by introducing a fictitious fallow crop in C belonging to a case-dependent type. Furthermore, we assume that an even period t need not be assigned to a second-semester crop when $t - 1 \in T_o$ is assigned to a first-semester crop.

As mentioned earlier, crops are also classified according to their type, namely as depleting, renewing and improving crops. The disjointed sets of depleting, renewing and improving crops are referred to as $C_D$, $C_R$ and $C_M$, respectively, with $C = C_D \cup C_R \cup C_M$. This classification is assigned to each crop based on its effect on the soil, affecting the yields of crops grown subsequently.

For effects due to crop rotation, sequences of k crops are generally considered for any $k \geq 1$. According to the invention, $k \geq 2$ and the yield obtained from growing a crop is considered to be affected by the k-1 crops preceding it on the same plot of land. Therefore, the yield obtained by assigning a crop c to a plot h depends on c and the types of the k-1 crops preceding c on h, if there are k-1 preceding crops. If the number of crops prior to c is less than k-1, then the yield depends on the types of all crops grown prior to c.

In addition, as a result of the constraints on maximum crop replanting, referred to above, there are limits on the number of consecutive repetitions of certain crops on the same plot of land. In more detail, crops are divided into homogeneous replanting groups, and those in the same group cannot be repeated consecutively on the same plot more than the maximum replanting value characteristic of the group.

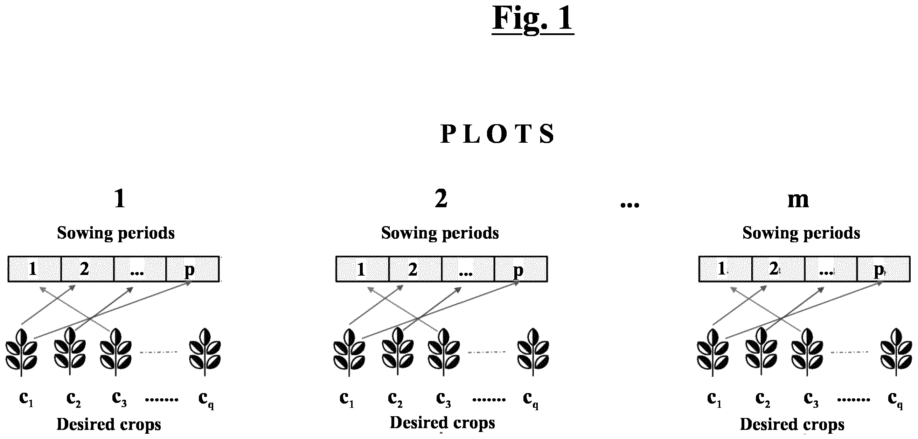

A crop assignment, as shown graphically schematically in Figure 1, consists of:

- allocate, on each plot, an annual or first-semester crop to each odd period of To;
- decide whether or not to assign a second-semester crop to each plot for each even empty period t, i.e., periods $t \in T_e$ such that t -1 is assigned to a first-semester crop.

An assignment defines a sequence of crops $\sigma = \langle c_1, c_2, ..., c_q \rangle$ on each plot, whose length q, i.e., the number q of crops in the sequence, depends on how many even periods are used for second-semester crops. In fact, the longest crop sequence assigns one crop to each T-period and, therefore, alternates between first- and second-semester crops. On the other hand, the shorter crop sequence does not assign second-semester crops; in other words, it contains p/2 annual or first-semester crops, where p is the last period of the time horizon T.

It is also denoted by $MAX_c^t$ and $MIN_c^t$ the maximum and minimum areas that can be allocated to crop c in each period $t \in T$, for all $c \in C$. Recalling the requirements on maximum replanting, a feasible crop allocation can be formally defined as follows. A crop allocation is feasible if:

- in each plot, the relative sequence of crops $\sigma$ does not contain a succession in which the crops of the same homogeneous replanting group are repeated consecutively a number of times greater than the maximum replanting value;
- the total area assigned to a crop c in a compatible period t belongs to the interval $[MIN_c^t, MAX_c^t]$, for all $c \in C$ and $t \in T$;
- each annual crop $c \in C_A$ sown on a plot in t $\in T_o$ remains on that plot for at least $2d_c$ periods from t (its required duration).

To define the yield of a feasible crop allocation, we further denote by $h \in H$ a plot, and by $\sigma = \langle c_1, c_2, ..., c_{q-1}, c_q \rangle$ the relevant sequence of crops. $\sigma$ assigns an annual or first-semester crop to each odd-numbered period and, possibly, second-semester crops to even-numbered periods. Thus, remembering that p is the last even period in T, $c_q$ is assigned to p-1 or p, depending on whether $c_q$ is a first-semester/annual or second-semester crop, respectively.

For each crop $c \in \sigma$, let $\sigma_k(c)$ be the subsequence or portion of the sequence of $\sigma$ containing the crop c and the k-1 crops immediately preceding c in $\sigma$, if any, and let t(c) be the period in which the crop c is sown. If less than k-1 crops precede c in $\sigma$, then $\sigma_k(c)$ will contain c and all previous crops. We denote by $Y_h(\sigma_k(c), t(c))$ the yield obtained by growing crop c on plot h in period t(c) when the at most k-1 crops immediately preceding c on h are those shown in $\sigma_k(c)$. The total yield $\pi_h(\sigma)$ obtained by growing the sequence of crops $\sigma$ on plot h is then given by

$$\pi_h(\sigma) = \sum_{c \in \sigma} Y_h(\langle \sigma_k(c) \rangle, t(c)), \tag{1}$$

i.e., the total yield $\pi_h$ for plot h is obtained as the sum of seasonal yields Yn in said planting periods t, each of which depends on the subsequence $\sigma_k(c)$ of at most k-1 previous crops c in h.

In a first particular case considered, k = 3. Such a value of k typically characterizes the Mediterranean pedo-climatic context. As an example, assume that the number of planting periods p is equal to 8 and consider a crop allocation corresponding to the sequence $\sigma = \langle c_1, c, c_{23}, c_4 \rangle$, where $c_1, c_2, c_3, c_4$ are annual crops. Thus, as reported above, crops $c_1, c_2, c_3, c_4$ are assigned to periods 1, 3, 5, 7, respectively. The total yield (1) produced by the sequence $\sigma = \langle c_1, c, c_{23}, c_4 \rangle$ on a plot h is given by the formula

$$\pi_h(\sigma) = Y_h(\langle c_1 \rangle, 1) + Y_h(\langle c_1, c_2 \rangle, 3) + Y_h(\langle c_1, c_2, c_3 \rangle, 5) + Y_h(\langle c_2, c_3, c_4 \rangle, 7) \qquad (1'),$$

which is the form of (1) for the particular case under consideration.

In another advantageous case, where k=2, i.e., in the case where the yield of a crop depends on the crop preceding it, the total yield formula (1') for the same sequence $\sigma = (c, c_{12}, c_3, c_4\rangle$ becomes

$$\pi_h(\sigma) = Y_h(\langle c_1 \rangle, 1) + Y_h(\langle c_1, c_2 \rangle, 3) + Y_h(\langle c_2, c_3 \rangle, 5) + Y_h(\langle c_3, c_4 \rangle, 7) \qquad (1''),$$

In a further advantageous case, where k=4, i.e., in the case where the yield of a crop depends on the three crops preceding it, for the same sequence $\sigma = \langle c_1, c_2, c_3, c_4 \rangle$, we have

$$\pi_h(\sigma) = Y_h(\langle c_1 \rangle, 1) + Y_h(\langle c_1, c_2 \rangle, 3) + Y_h(\langle c_1, c_2, c_3 \rangle, 5) + Y_h(\langle c_1, c_2, c_3, c_4 \rangle, 7) \qquad (1'''),$$

Note that for k≥2, and particularly in all three cases exemplified above, i.e., for k-1=1, 2 or 3, the crop yield takes into account one or more previous crops. This aspect is not considered in either Fikry et al. or Santos, Costa et al., where we have k=1, i.e., k-1=0, i.e., the yield of a crop does not depend on those previously assigned to the same plot.

In the above examples given in formulas (1') to (1'''), only annual crops were considered. However, the same approach also applies to the case where there are two crops per year, or to cases where there are two crops per year in the same plot, and years where there is only one crop. Consider in this regard an example with a number of planting periods p equal to 6, and a crop allocation corresponding to the sequence $\sigma = \langle c_1, c_2, c_3, c_4, c_5 \rangle$, where $c_1$ and $c_3$, are first-semester crops, $c_2$ and $c_4$ are second-semester crops, and $c_5$ is an annual crop. Thus, crops c, $c_1$, $c_2$, $c_3$, $c_4$, $c_5$ are assigned to periods 1, 2, 3, 4, 5, respectively. Applying this sequence for k=3, the total yield (1) produced by the sequence $\sigma = \langle c_1, c_2, c_3, c_4, c_5 \rangle$ on a plot h is given by the formula

$$\pi_h(\sigma) = Y_h(\langle c_1 \rangle, 1) + Y_h(\langle c_1, c_2 \rangle, 2) + Y_h(\langle c_1, c_2, c_3 \rangle, 3) + Y_h(\langle c_2, c, c_{34} \rangle, 4) + Y_h(\langle c_3, c_4, c_5 \rangle, 5) \qquad (2)$$

For k=2 the total yield is:

$$\pi_h(\sigma) = Y_h(\langle c_1 \rangle, 1) + Y_h(\langle c_1, c_2 \rangle, 2) + Y_h(\langle c_2, c_3 \rangle, 3) + Y_h(\langle c_3, c_4 \rangle, 4) + Y_h(\langle c_4, c_5 \rangle, 5) \qquad (2')$$

Instead, for k=4, the total yield of $\sigma$ is as follows:

$$\pi_h(\sigma) = Y_h(\langle c_1 \rangle, 1) + Y_h(\langle c_1, c_2 \rangle, 2) + Y_h(\langle c_1, c_2, c_3 \rangle, 3) + Y_h(\langle c_1, c_2, c_3, c_4 \rangle, 4) + Y_h(\langle c_2, c_3, c_4, c_5 \rangle, 5) \quad (2'')$$

In light of the above, that is, indicating with:

- C = $\{c_1, c_2, ..., c_n\}$ a set of crops $c_i$,
- H = $\{h_1, h_2, ..., h_m\}$ an agricultural land consisting of one or m plots h in area,
- T = $\{t, t_{12}, ..., t_p\}$ a time horizon, that is, a set of p consecutive periods;
- $\pi_h(\sigma)$ the yields for all c ∈ C, and for each h ∈ H and for all possible $\sigma$ sequences of crops,
- $MIN_c^t$ and $MAX_c^t$ the areas to be allocated to each crop c ∈ C in each period t E T,

and assigned the maximum values of replanting of homogeneous groups of crops, as well as the duration of annual crops, it is possible to define in general terms the "CRP-k" problem of crop rotation according to subsequences of length k, which consists of identifying a feasible crop allocation that defines a sequence of crops $\sigma$ on each plot h and maximizes the total yield according to (1).

As an example, we consider a CRP-3 case in which.

- C = $\{c_1, c_2, c_3\}$ includes three crops, where $c_1$ and $c_2$ are annual crops with a minimum duration of 1 year and $c_3$ a first-semester crop;
- H = $\{h_1\}$ is agricultural land consisting of a single plot h of total area $s_1$;
- T = $\{t, t_{12}, ..., t_{10}\}$ is a time horizon of ten seasons, corresponding to five years;

- $MIN_c^t = 0$ and $MAX_c^t = s_1$ for all $c \in C$ and $t \in T$;
- each crop belongs to a different homogeneous replanting group with a maximum replanting equal to two.

Therefore, the planting periods are all the odd periods of T, i.e., $T_o = \{1, 3, ..., 9\}$. We consider the solution in which the crops $c_1, c_1, c_2, c_3, c_2$ are neatly assigned to the odd periods of $T_o$ on the only available plot, producing the sequence of crops $\sigma = \langle c_1, c_1, c_2, c_3, c_2 \rangle$. Such an allocation of crops is feasible because it satisfies the requirement of maximum replanting, i.e., no crop is repeated consecutively more than twice, and the constraints on minimum and maximum area for each period and crop are trivially satisfied. Based on the above, the total yield of the solution can be expressed as

$$\pi_1(\sigma) = Y_1(\langle c_1 \rangle, 1) + Y_1(\langle c_1, c_1 \rangle, 3) + Y_1(\langle c_1, c_1, c_2 \rangle, 5) + Y_1(\langle c_1, c_2, c_3, \rangle, 7) + Y_1(\langle c_2, c_3, c_2 \rangle, 9),$$
$$(1")$$

Which translates (1) for this specific CRP-3 problem.

The formulations according to (1), (1'), (1") correspond to CRP-k planning, especially CRP-3, of crops in the scenario of farmers not subject to special regulations such as those mentioned above. However, such scenarios can be contemplated by appropriately redefining the feasible crop allocation to account for the additional constraints.

A simplified version of CRP-k is now described, referred to as SCRP-k in which:

- there are no constraints on the minimum and maximum area to be allocated to each crop in each period, i.e. (i.e. $MIN_c^t = 0$ and $MAX_c^t = \infty$ for all $c \in C$ and $t \in T$;

- the maximum replanting for each group and the duration $d_c$ of each annual crop c is, at most, k-1.

Such a planning problem, particularly SCRP-3, can be modeled and solved as a flow problem on minimum-cost networks, as described below. It is also assumed that all plots are homogeneous, i.e., have the same size and yield characteristics per crop.

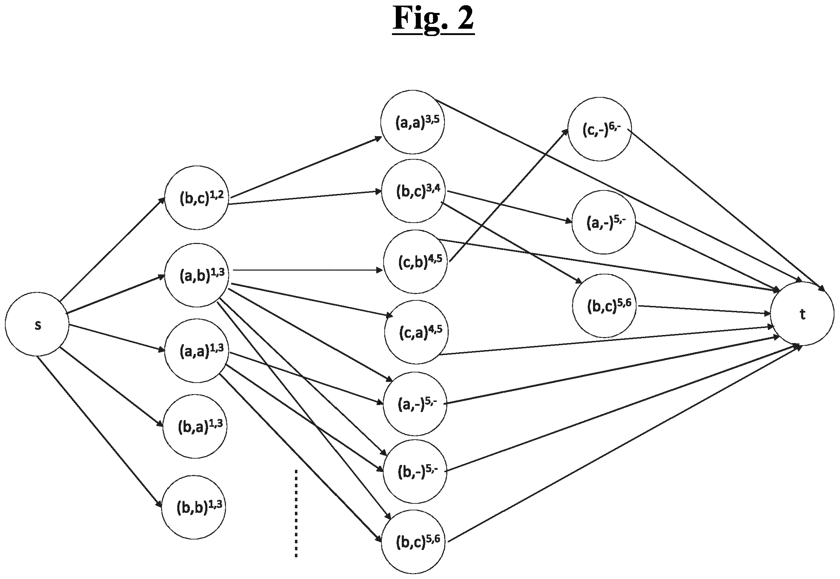

Figure 2 shows the G graph for an SCRP-3 case with a 3-year planning horizon $T = \{1, 2, 3, 4, 5, 6\}$ and 3 crops $C = \{a, b, c\}$, where a is an annual crop and b and c are first- and second-semester crops, respectively.

More generally, again denoting by m the number of plots h and by $G = (V, E)$ a graph in which V and E are the sets of nodes and arcs, respectively, a flow problem on minimum-cost networks with a source node s and a demand node d. An amount of flow equal to m must be sent from s to d.

The nodes of the set V are divided into levels, e.g., $L_0, L_1, ..., L_l$, where $L_0$ and $L_l$ contain only the source node s and only the demand node d, respectively. The arcs of the set E connect only the nodes of two adjacent levels $L_i, L_{i+1}$, for $i = 0, ..., l-1$, or a node of a level with the demand node. Each arc is assigned a minimum and maximum capacity equal to 0 and m, respectively. Each node of an intermediate level $L_i$, for $i = 1, ..., l-1$, is denoted as $(a,b)^{t,q}$ and models the assignment of the two crops a and b of the set C on the two compatible periods t and q, respectively, with $t < q$, when no other crop is assigned to the periods $t+1, t+2, ..., q-1$.

An arc between nodes of levels $L_i$ and $L_{i+1}$, with $1 \le i < l-1$, models a sequence of four crops, possibly not all distinct, in four periods, as shown below. We denote as $(a,b)^{t,q}$ and $(c,d)^{u,v}$ two nodes of the levels $L_i$ and $L_{i+1}$, respectively, with $1 \le i < l-1$. The flow on the arc from $(a,b)^{t,q}$ to $(c,d)^{u,v}$ represents the number of plots where the sequence of crops $\langle a, b, c, d \rangle$ is assigned to the compatible set of periods $\{t, u, v\}$. Note that the arc from $(a,b)^{t,q}$ to $(c, d)^{u,v}$ allows us to keep track of the two cultures preceding c and d, i.e., $(a, b)$ and $(b, c)$, respectively. Given a node $(c, d)^{u,v}$ of an intermediate level, it may happen that crop d does not exist (for example, when $u = p$ is the last period of T, or when $u = p-1$ and c is an annual crop). In these cases, the node is written as $(c,-)^{u,-}$. The yield assigned to the arc from $(a, b)^{t,q}$ to $(c, d)^{u,v}$ is equal to the yield for each of the plots considered homogeneous, obtained by assigning crops c and d to periods u and v, respectively, when the two preceding crops c and d are those respectively given in the 3-crop sequences $\langle a, b, c \rangle$ and $\langle b, c, d \rangle$, i.e.:

$$Y(\langle a, b, c \rangle, u) + Y(\langle b, c, d \rangle, v).$$

The yield assigned to an arc from the source node s to a node $(a, b)^{t,q}$ of the first intermediate level $L_1$ is equal to the yield obtained by assigning the sequence $(a, b)$ to the periods $\{t,q\}$, i.e:

$$Y(\langle a \rangle, t) + Y(\langle a, b \rangle, q).$$

Below, we derive the lengths of the shortest and longest paths on G. Given a node $(a, b)^{t,q}$ of G, we have q = t +1 or q = t +2. In fact, if a and b are a first- and second-semester crop, respectively, then t is an odd period and q = t +1. On the other hand, if neither a nor b are second-semester crops, then t and q are odd periods and q = t+2. Based on this observation, and remembering that the length of a sequence of crops in a crop assignment (from period 1 to period p) depends on how many even periods are assigned to second-semester crops, one can easily determine the length of a shorter path and a longer path on G, in terms of the number of nodes. In fact, a path on G cannot be shorter than a path containing only nodes $(a, b)^{t,q}$, where a and b are annual or first-semester crops (and consequently where t and q are consecutive odd periods). On the other hand, a path on G cannot be longer than a path containing only nodes $(a, b)^{t,q}$, which represent a succession of first- and second-semester crops in which q = t+1. Therefore, such a path is the longest path on G.

In the following we obtain the number of levels and the number of nodes of each level in G as p/2 +2, where p is the last period of the time horizon T. Recalling that the time periods in the time horizon $T = \{t_1, t_2, ..., t_p\}$ correspond to the first and second semesters of a given number of consecutive years, where the period $t_1$ is the first semester of the first year and the last period $t_p$ is the second semester of the last year, since each node of a path in G belongs to a different level, the number of levels is equal to the length of a longer path on G. As noted above, a path visiting nodes $(a, b)^{t,q}$, where a and b are first- and second-semester crops, respectively, assigned to periods $t \in T_o$ and q = t +1, is a longer path on G. Therefore, it is easy to see that a longer path from the source node to the demand node must contain p/2+2 nodes, which by definition of G, belong to distinct levels.

In the following we determine the maximum number of nodes contained in each level $L_i$ of G as $4in^2$, where n is the number of crops in C, for i = 1, ..., p/2 +1. In fact, a node $(a, b)^{t,q}$ of each level $L_i$, for i = 1, ..., 1-1, is bound to a pair of cultures a, b E C and a pair of periods t,q E T, with q E {t +1, t +2}. First, the number of possible pairs of periods t,q associated with the nodes of each level $L_i$ is calculated. For this purpose, given a node $(a, b)^{t,q}$ of level $L_i$, the minimum and maximum values assumed by t and q are determined. Recalling that each arc connecting the nodes of two intermediate levels $L_i$ and $L_{i+1}$ connects a node $(a, b)^{t,q}$ with a node $(c, d)^{u,v}$ and that, as already noted, there exists on G a shorter path $P_s$ containing only nodes related to annual and first-semester crops, let $(a, b)^{t,q}$ and $(c, d)^{u,v}$ be the two nodes, consecutive, of the path $P_s$ belonging to levels $L_i$ and $L_{i+1}$, respectively. With a, b, c and d being first-semester or annual crops, and t,q, u,v, being consecutive odd periods. On such a path, an arc from $(a, b)^{t,q}$ to $(c, d)^{u,v}$ "moves" from period $t \in T_o$ to v = t +6 $\in T_o$. No other succession of four consecutive crops produces a greater shift than this, in terms of the number of periods. Therefore, the level node L; belonging to the path $P_s$, i.e. $(a, b)^{t,q}$, has the largest period values t and q. In fact, we obtain t = 4i-3 and q = 4i-1.

Similarly, as already noted, there is a longer path on G, e.g., Pi, containing only the nodes related to first- and second-semester crops. Thus, given two consecutive nodes $(a, b)^{t,q}$ and $(c, d)^{u,v}$ on $P_l$, we have that t,q, u,v are consecutive periods (with q =t +1, u =t +2, and v =t +3), and the arc from $(a, b)^{t,q}$ to $(c,d)^{u,v}$ "shifts" from period t to v = t +3. No other succession of four consecutive harvests produces a smaller shift than this, in terms of the number of periods. Therefore, the minimum values assumed by the periods associated with the nodes in the L level; are respectively the periods t and q of the node $(a, b)^{t,q}$ on Pi, for which we obtain = 2i-1 and q = 2i.

Let $(i, j)^{t_1,t_{max}}$ and $(f, g)^{t_2,t_{min}}$ be the nodes in the intermediate level $L_i$ belonging to the shortest path $P_s$ and the longest path Pi of G, respectively, where $t_{max}$ and $t_{min}$ are the maximum and minimum period in which the second harvest of a node can be seeded in that level. Based on the previous discussion, $t_{max}$ = 4i-1 and $t_{min}$ = 2i, so $t_{max} - t_{min}$ = 2i-1. In fact, $t_{max}$ = 4i-1 $\in T_o$ is the seeding period of the 2i-th crop of the shortest cropping sequence, containing only annual or first-semester crops, while $t_{min} \in T_e$ is the seeding period of the 2i-th crop of the longest cropping sequence, which alternates between first- and second-semester crops. Consequently, the last period q of each node $(a, b)^{t,q}$ in the L level; can take at most 2i values, i.e., $2i \leq q \leq 4i-1$. Since, in $(a, b)^{t,q}$, the first period t belongs to {q-2, q-1}, the number of possible pairs of periods associated with nodes in $L_i$ is $2 \times 2i$. Recalling that in the intermediate level $L_i$ there are at most two nodes for each pair of crops a, b and periods t,q, i.e., $(a, b)^{t,q}$ and $(b, a)^{t,q}$, the nodes in $L_i$ are at most $4in^2$.

In the following we show that the total number of nodes in G. is $O(n\ p^{22})$, where n is the number of crops in C and p is the number of time periods in T.

This follows easily from the above, and from the fact that

$$\sum_{i=1}^{p/2} 4in^2 = 4n^2(p/4)(p/2+1).$$

It follows from the above that, when $MIN_c^t$ = 0 and $MAX_c^t = \infty$ for each c $\in$ C and each t $\in$ T, CRP-3 can be solved optimally in polynomial time by solving a minimum-cost network flow problem on the graph G. In fact, SCRP-3 can be converted into a minimum-cost network flow problem with negative arc lengths by simply changing the sign of the yields on all the arcs in G. Such a problem can be solved in polynomial time when the graph is acyclic or does not contain direct negative-cost cycles of infinite capacity (see [2]). Note that the graph G is acyclic and has finite arc capacity (bounded between 0 and m) and, therefore, SCRP-3 can be solved in polynomial time as a minimum-cost network flow problem. Also, recall that when all arc capacities are constrained, a minimum-cost network flow problem with negative arc lengths can be easily converted to a minimum-cost network flow problem with nonnegative arc lengths [2].

In the case of the graph in Figure 2, referring to an SCRP-3 case with a 3-year planning horizon T = {1, 2, 3, 4, 5, 6} and 3 crops C = {a, b, c}, where a, b, c are annual, first-semester and second-semester crops, respectively, a and b can be assigned to periods in $T_o$ ={1, 3, 5}, and c to periods in $T_e$ ={2, 4, 6}. A shorter path on G, alternating annual or first-semester crops, is s → (a,b)$^{1,3}$ → (a,-)$^{5,-}$ → t. On the other hand, a longer path on G, alternating first- and second-semester crops, is s → (b,c)$^{1,2}$ → (b,c)$^{3,4}$ → (b,c)$^{5,6}$ → t.

The G graph now described can be suitably modified to model SCRP-k when k > 3. The G graph used to model SCRP-k is also a multilayer graph, except that a node in each intermediate level models the assignment of a portion of the sequence of k-1 crops to k-1 compatible periods. Such a node can be denoted as $(c_1 , c_2 , ..., c )_{k-1}{}^{t1, t2, ..., tk-1}$. Taking advantage of the concepts of shortest and longest path on the G-graph introduced for SCRP-3, it can be shown that the number of levels and nodes in each level is polynomial with respect to the number of crops and periods. This implies that SCRP-k can be solved polynomially as a minimum-cost network flow problem when k is fixed, i.e., not part of the input.

The above can be easily extended to the case of inhomogeneous plots by a different graph for each set of homogeneous plots, solving a similar minimum-cost network flow problem on each graph.

The G graph can be suitably modified to model the CRP-k problem, as described below. To model CRP-k using the *G-graph* introduced for *SCRP-k,* the graph must be modified so that each node represents a succession of r crops, where r is appropriately set to account for constraints on the maximum replantation and rotation parameter *k*. In fact, only sequences that are feasible with respect to the constraints on maximum replanting will be represented in the graph as nodes or paths. Furthermore, the connection between two nodes must allow k consecutive crops to be considered in order to correctly calculate the yield of each crop, which depends on the *k* -1 previous crops. To determine the number of crops r at each node, we define *Rmax* as the maximum replanting value among all botanical groups.

We can distinguish two cases:

- If *k* > *Rmax* , then $\tau = k$ - 1 is set (as in the SCRP-k case). In fact, in this case, it is sufficient to control k consecutive crops, and this is always possible if each node represents a subsequence of *k* - 1 crops (i.e., an arc connects two nodes each containing a subsequence of *k* - 1 crops);
- If *k* ≤ *Rmax* , we set *r = Rmax* . In this case, maximum replanting constraints can be satisfied by considering *R* + 1 consecutive crops.

In the following, we present an integer linear programming (ILP) model for *CRP-k* based on the graph *G = (V, E)* (with *V* being a set of arcs and *E* being a set of arcs), where each node of G represents a sub-sequence of crops $\tau$, with $\tau$ defined above. Let $\delta +(i)$ be the set of arcs starting from node *i* and $\sigma -(i)$ the set of arcs entering node *i*, for all $i \in V$.

Let *Y i,j* be the value, that is, the yield, associated with arc $(i, j) \in E$.

Given an intermediate node $i = (a1, a2 , ..., \alpha\tau )^{t1, t2, ..., t\tau} \in V$, we denote by {[a1 ,t1 ], [a2 , $t_2$ ], ... , [$\alpha\tau, t\tau$]} the set of culture-period pairs r relative to node i and, abusing the notation, we say that the pair $[c, u] \in i$ if $[c, u] \in$ {[a1 ,t1 ], [a2 ,$t_2$ ], ... , [$\alpha\tau, t\tau$]}.

Let us now introduce the variables of the *G-graph-based* ILP model, referred to in the following as G-ILP.

Let *xi,j* be a variable equal to the flow over the arc *(i, j)* of *G,* that is, the number of plots that follow the (partial) sequence of crops specified by nodes *i* and *j*.

In G-ILP, *s* is the size of each homogeneous plot of land over which G is defined, *B* is the set of botanical groups B = {B1 , B2 , .... , Bl } in which crops are divided into $CA \cup CF$ and $Cleg \subseteq CA \; 2 \cup CF$ contains nitrogen-fixing crops. The G-ILP model reads as follows.

$$\max \sum_{(i,j) \in E} Y_{i,j} x_{i,j} \tag{A}$$

$$\sum_{(i,j) \in \delta^+(i)} x_{i,j} - \sum_{(j,i) \in \delta^-(i)} x_{j,i} = \begin{cases} m, \text{if } i = s \\ -m, \text{if } i = d \\ 0, \forall i \in V \setminus \{s, d\} \end{cases} \tag{B}$$

$$\sum_{(i,j) \subset E:[c,t] \subset j} s\, x_{i,j} \geq MIN_c^t \qquad \forall c \in C, \forall t \in T \tag{C}$$

$$\sum_{(i,j)\in E:[c,t]\in j} s\, x_{i,j} \leq MAX_c^t \qquad \forall c \in C,\ \forall t \in T \qquad\qquad\qquad (D)$$

$$\sum_{(i,j)\in E:[c,t]\in j\ c\in C_{leg}} s\, x_{i,j} \geq 0.05 S_{tot} \qquad \forall t \in T_o \qquad\qquad\qquad (E)$$

$$\sum_{(i,j)\in E:[c,t]\in j\ c\in B_g} s\, x_{i,j} \leq 0.75 S_{tot} \qquad \forall g \in \{1,\dots,l\},\ \forall t \in T_o \qquad\qquad (F)$$

$$\sum_{(i,j)\in E:[c,t]\in j\ c\in B_f\cup B_g} s\, x_{i,j} \leq 0.95 S_{tot} \qquad \forall f,g \in \{1,\dots,l\},\ \forall t \in T_0 \qquad\qquad (G)$$

$$x_{i,j} \in \mathbb{Z} \qquad \forall (i,j) \in E \qquad\qquad\qquad (H)$$

In which:

- The objective function (A) represents the maximization of total return.

- Constraints (B) are the flow conservation constraints at each node.

- Constraints (C) and (D) impose a minimum and maximum area for each crop in each period.

- Constraints (E)-(G) are the diversification PAC constraints.

- Constraints (E) set the minimum land size to be allocated to legumes in each period.

- Constraints (F) stipulate that crops of the same botanical family can be allocated a maximum of 75% of the area in each period.

- Constraints (G) stipulate that crops from two different botanical families can be allocated a maximum of 95 percent of the area in each period.

- Finally, constraints (H) impose integer flows on the arcs.

Note that since G is an acyclic graph, the problem (A)-(B) corresponds to *SRCP-k* and can be solved as a minimum-cost network flow problem in which the arc cost $(i, j)$ is set to -*Yij*. When the maximum replanting among all botanical groups in *B* is less than k, the size of G is polynomial with respect to the number of crops and periods. However, CRP-k is strongly NP-hard in general, and the size of the graph and, consequently, the number of G-ILP variables increase strongly as the size of the instances (in terms of number of crops and periods) increases. To cope with this problem, G-ILP can be 4 solved with a column generation approach.

An integer linear programming (ILP) formulation for CRP-k with k = 3 is now described. As mentioned above, considering three-crop rotation schemes is a consequence of best agronomic practice in Mediterranean soil and climate settings, based on the succession of three crop species. It is therefore assumed that the yields obtained from growing one crop on a plot of land are influenced by the species of, at most, the two crops that precede it on the same plot of land.

Recalling the classification of crops into renewing (set $C_R$), depleting ($C_D$), and improving ($C_M$), and that while all possible successions of crop types are allowed, for each assigned crop c a yield loss may occur depending on the types of c and the two immediately preceding crops, if any, since k = 3, to determine the yield of a crop c assigned to a given time period $t \geq 3$, the types of the two immediately preceding crops c, if any, must be taken into account. When c is preceded only by a crop b, the yield of c is determined by considering only the sequence of two crops (b, c).

3-rotation and 2-rotation denote successions of three and two types of crops, respectively. Let $R_3$ and $R_2$ be the sets of all possible 3-rotations and 2-rotations, which are 27 and 9 in number, respectively, since three types of crops (depleting, renewing and improving) are considered for rotations. Given a sequence of three crops $\sigma_3 = \langle c_1, c_2, c_3 \rangle$, we denote by $r = \langle \alpha, \beta, \gamma \rangle \in R_3$ the corresponding 3-rotation, where $\alpha, \beta, \gamma$ are the types of the crops $c_1, c_2$ and $c_3$, respectively.

Similarly, given a sequence of two cultures $\sigma_2 = \langle c_1, c_2 \rangle$, we denote by $r = \langle \alpha, \beta \rangle \in R_2$ the corresponding 2-rotation, where $\alpha, \beta$ are the types of the cultures $c_1$ and $c_2$, respectively. In the following, given a sequence of three cultures $\sigma_3 = \langle c_1, c_2, c_3 \rangle$ and the corresponding 3-rotation $\langle \alpha, \beta, \gamma \rangle \in R_3$, we denote by $C_\alpha$, $C_\beta$ and $C_\gamma$ respectively the sets of all cultures of type $\alpha, \beta, \gamma$. Similarly, given a sequence of two cultures $\sigma_2 = \langle c_1, c_2 \rangle$ and the corresponding 2-rotation $\langle \alpha, \beta \rangle \in R_2$, we denote by $C_\alpha$, $C_\beta$ respectively the sets of all cultures of type $\alpha, \beta$.

The decision variables used in the model are:

- $x^t_{ch} \in \{0, 1\}$

    **=1,** if crop c 6 C is assigned to plot h E H in period t e
    **=0,** otherwise.

- $y^t_{rch} \in \{0, 1\}$

    **=1,** if the crop $c \in C$ is assigned to the plot h E H in an odd period $t \geq 5$, activating the 3-rotation $r \in R_3$ e
    **=0,** otherwise.

- $y_{rch} \in \{0, 1\}$

    **=1,** if crop $c \in C$ is assigned to plot h E H in period 3 by activating 2-rotation r E Rz e
    **=0,** otherwise.

- $w^t_{rch} \in \{0, 1\}$

    **=1,** if the second-semester crop c E Cs is assigned to the plot h E H in the even period t, with $t \geq 4$, activating the 3-rotation $r \in R_3$ e
    **=0,** otherwise.

- $w_{rch} \in \{0, 1\}$

    **=1,** if the second-semester crop c E Cs is assigned to the plot h E H in period 2, activating the 2-rotation $r \in R_2$ e
    **=0,** otherwise.

Let $P_c^{ht}$ be the nominal yield obtained by assigning the crop $c \in C$ on the plot h E H in period t, when the best crop rotation practice is followed, i.e., when no yield loss occurs. Given a sequence $\sigma_3 = \langle c_1, c_2, c_3 \rangle$, let $r \in R_3$ be the 3-rotation triggered by the sequence. Then, the effective yield $Y_h(\sigma_3, t)$ obtained from the crop $c_3 \in C$ when it is assigned at time t and preceded by the crops $\langle c_1, c_2 \rangle$ on plot h is $Y_h(\sigma_3, t) = P_{c3}^{ht} - L_{rc}^{ht}{}_3$, where $L_{rc}^{ht}{}_3$ is the yield loss, which is 0 if r is a best practice rotation, produced by rotation r when crop $c_3$ is assigned to plot h at time t. Similarly, one can define the yield obtained by assigning the last crop $c_2 \in C$ of a 2-crop sequence $\sigma_2 = \langle c_1, c_2 \rangle$ to plot h at time t, with t = 2, 3, by activating the 2-rotation $r \in R_2$, as $Y_h(\sigma_2, t) = P_{c2}^{ht} - L_{rc}^{ht}{}_2$. Since in CRP-3 the objective is to maximize total yield, the objective function is:

$$\max \sum_{t \in T} \sum_{h \in H} \sum_{c \in C} P_c^{ht} x_{ch}^t - \sum_{h \in H} \sum_{c \in C} \sum_{r \in R_3} \left( \sum_{t \in T_o: t \geq 5} L_{rc}^{ht} y_{rch}^t + \sum_{t \in T_e: t \geq 4} L_{rc}^{ht} w_{rch}^t \right) - \sum_{h \in H} \sum_{c \in C} \sum_{r \in R_2} (L_{rc}^{h3} y_{rch} + L_{rc}^{h2} w_{rch}) \qquad (2)$$

The constraints of the problem are:

$$\sum_{c \in C} x_{ch}^t \leq 1, \forall h \in H, \forall t \in T \qquad (3)$$

$$\sum_{h \in H} s_h x_{ch}^t \leq MAX_c^t \ \ \forall c \in C, \forall t \in T \qquad (4)$$

$$\sum_{h \in H} s_h x_{ch}^t \geq MIN_c^t \ \ \forall c \in C, \forall t \in T \qquad (5)$$

$$\sum_{c \in C_F \cup C_A} x_{ch}^t = 1, \forall h \in H, \forall t \in T_o \tag{6}$$

$$x_{ch}^t = 0, \forall c \in C_F, \forall h \in H, \forall t \in T_e \tag{7}$$

$$x_{ch}^t = 0, \forall c \in C_S, \forall h \in H, \forall t \in T_o \tag{8}$$

$$x_{ch}^t \le \sum_{k \in C_F} x_{kh}^{t-1}, \forall c \in C_S, \forall h \in H, \forall t \in T_e \tag{9}$$

$$x_{ch}^{t+1} \ge x_{ch}^t \quad \forall c \in C_A, \forall h \in H, \forall t \in T_o \tag{10}$$

$$x_{ch}^{t+1} \le x_{ch}^t \quad \forall c \in C_A, \forall h \in H, \forall t \in T_o \tag{11}$$

$$x_{ch}^{t+2q} \ge x_{ch}^t - x_{ch}^{t-1} \quad \forall c \in C_A, \forall h \in H, \forall t \in T_o, \forall q = 1, \ldots, d_c - 1 \tag{12}$$

$$\sum_{c \in RG_i} \sum_{q=t: q \in T_o}^{t+2rep_i} x_{ch}^q \le rep_i + \sum_{c \in C_S} \sum_{q=t+1: q \in T_e}^{t+2rep_i-1} x_{ch}^q \quad \forall i : RG_i \cap C_S = \emptyset, i = 1 \ldots, ng, t \in T_o \tag{13}$$

$$\sum_{c \in RG_i \setminus C_S} \sum_{q=t: q \in T_o}^{t+p} x_{ch}^q + \sum_{c \in RG_i \cap C_S} \sum_{q=t: q \in T_e}^{t+p} x_{ch}^q \le rep_i + (rep_i + 1) \sum_{c \in C \setminus RG_i} \sum_{q=i}^{t+p} x_{ch}^q \tag{14}$$

$$\forall i : RG_i \cap C_S \ne \emptyset, i = 1 \ldots, ng, p = rep_i, \ldots, 2rep_i, \forall h \in H, t \in T$$

In more detail, the constraints

- **(3)** state that in each period t, i.e. semester, a maximum of one crop may be assigned to each plot;
- **(4)** and **(5)** impose the minimum and maximum area allocated to each crop in each period;
- **(6)** stipulate that in each odd-numbered period, each plot shall be assigned a first-semester or annual crop;
- **(7)-(11)** establish the planting periods for annual, first-semester and second-semester crops. Specifically, constraints **(10)** and **(11)** dictate that an annual crop occupies both semesters t and t +1, with 16 To, of a given year;
- **(12)** establish that if the annual crop c is assigned to period t but not to period t -1, then it must be assigned to periods {t, t +1, ..., t+2dc -1} (it must remain on the plot for its duration, corresponding to 2dc consecutive periods);
- **(13)** and **(14)** given below impose requirements on maximum replanting. In the constraints, let ng be the number of homogeneous replanting groups, RG; the set of crops in the i-th group, and rep; the maximum replanting value of $RG_i$, for i = 1, ..., ng. Thus, $rep_i$ is the maximum number of times $RG_i$ crops can be consecutively assigned to the same plot.

More precisely, constraint (13) states that, for each homogeneous $RG_i$ replanting group, the number of crops in $RG_i$ grown in the odd-numbered periods from t to t +2$rep_i$ must not be greater than the maximum value of $rep_i$ replanting group $RG_i$. The second term on the right-hand side of the constraints reflects the fact that if there are second-semester crops grown in the even periods between t+1 and t+2$rep_i$ -1, the constraint is relaxed, because the second-semester crops interrupt the sequence of consecutive crops belonging to $RG_i$. Constraint (14) imposes that, for each homogeneous $RG_i$ replanting group containing second-semester crops, the sum of second-semester crops in $RG_i$ grown in even periods from t to t + p and crops in $RG_i$ grown in odd periods in {t, t +1, ..., t + p} is not greater than rep; . The sum in the right-hand side of the constraints is for all non-$RG_i$ crops grown from t to p. If this sum is greater than zero, then the sequence of crops from t to t + p contains at least one non-RG crop;, and the constraint is inactive.

Constraints on crop rotation are presented below. Recall that a 3-rotation r ∈ $R_3$ is the succession r = ⟨α, β, γ⟩ of three crops of type α, β and γ, respectively, while a 2-rotation r ∈ $R_2$ is the succession r = ⟨α, β⟩ of two crops of type α and β. Cultures of type α, β and γ are denoted as $C_\alpha$, $C_\beta$ and $C_\gamma$ , respectively.

$$y^t_{rch} \geq x^t_{ch} + \sum_{i \in C_\alpha} x^{t-4}_{ih} + \sum_{i \in C_\beta} x^{t-2}_{ih} - \sum_{i \in C_S} x^{t-1}_{ih} - \sum_{i \in C_S} x^{t-3}_{ih} - 2, \forall r = \langle \alpha, \beta, \gamma \rangle \in R_3, \forall c \in C_\gamma, \forall h \in H, t \in T_o, t \geq 5 \quad (15)$$

$$y^t_{rch} \geq x^t_{ih} + \sum_{i \in C_\beta} x^{t-1}_{ih} + \sum_{i \in C_\alpha} x^{t-2}_{ih} + \sum_{i \in C_S} x^{t-1}_{ih} - 3, \forall r = \langle \alpha, \beta, \gamma \rangle \in R_3, \forall c \in C_\gamma, \forall h \in H, \forall t \in T_o, t \geq 3 \quad (16)$$

$$y^t_{rch} \geq x^t_{ih} + \sum_{i \in C_\beta} x^{t-2}_{ih} + \sum_{i \in C_\alpha} x^{t-3}_{ih} + \sum_{i \in C_S} x^{t-3}_{ih} - \sum_{i \in C_S} x^{t-1}_{ih} - 3, \forall r = \langle \alpha, \beta, \gamma \rangle \in R_3, \forall c \in C_\gamma, \forall h \in H, \forall t \in T_o, t \geq 5 \quad (17)$$

$$w^t_{rch} \geq x^t_{ch} + \sum_{i \in C_\beta} x^{t-1}_{ih} + \sum_{i \in C_\alpha} x^{t-3}_{ih} - \sum_{i \in C_S} x^{t-2}_{ih} - 2, \forall r = \langle \alpha, \beta, \gamma \rangle \in R_3, \forall c \in C_\gamma, c \in C_S, \forall h \in H, \forall t \in T_e, t \geq 4 \quad (18)$$

$$w^t_{rch} \geq x^t_{ch} + \sum_{i \in C_\beta} x^{t-1}_{ih} + \sum_{i \in C_\alpha} x^{t-2}_{ih} + \sum_{i \in C_S} x^{t-2}_{ih} - 3, \forall r = \langle \alpha, \beta, \gamma \rangle \in R_3, \forall c \in C_\gamma, c \in C_S, \forall h \in H, \forall t \in T_e, t \geq 4 \quad (19)$$

$$y_{rch} \geq x^t_{ch} + \sum_{i \in C_\alpha} x^{t-2}_{ih} - \sum_{i \in C_S} x^{t-1}_{ih} - 1, \forall r = \langle \alpha, \beta \rangle \in R_2, \forall c \in C_\beta, \forall h \in H, t = 3 \quad (20)$$

$$w_{rch} \geq x^t_{ch} + \sum_{i \in C_\alpha} x^{t-1}_{ih} - 1, \forall r = \langle \alpha, \beta \rangle \in R_2, \forall c \in C_\beta, c \in C_S, \forall h \in H, t = 2 \quad (21)$$

These constraints force the variables y and w to take the value 1 when specific rotation patterns occur, taking into account different cases that depend on how many second-semester crops are grown in a given crop sequence. Constraints (15)-(17) consider only odd periods $t \in T_o$ and take into account all combinations of the previous two crops. More precisely, the constraints

- **(15)** refer to the case where no second-semester crops are grown in the even periods t -1 and t -3 and, therefore, the two crops preceding c in t are annual or first-semester crops assigned to the periods t -2 and t -4. In this case, $y^t_{rch}$ is forced to be equal to 1 when $x^t_{ch}$ = 1;
- **(16)** obligate $y^t_{rch}$ to be equal to 1 when the crop $c \in C_\gamma$ is grown in the odd period t, a second-semester crop in $C_\beta$ is assigned to the (even) period t -1, and a crop in $C_\alpha$ is grown in t -2;
- **(17)** state that $y^t_{rch}$ = 1 if: (i) $c \in C_\gamma$ is grown in the odd period t, (ii) a second-semester crop of $C_\beta$ is assigned at t -2, (iii) a second-semester crop of $C_\alpha$ is in t - 3, and (iv) no second-semester crop is assigned at t -1.

On the other hand, constraints (18) and (19) consider only periods even $t \in T_e$ and consider all possible combinations of the previous two crops. More specifically, the constraints

- **(18)** impose that if $c \in C_\gamma$ is grown in t, a crop in $C_\beta$ is in t -1, a crop in $C_\alpha$ is in t - 3, and there is no crop in Cs in t -2, then $w^t_{rch}$ = 1;
- **(19)** Establish that if $c \in C_\gamma$ is grown in t, a crop in $C_\beta$ is in t -1, a crop in $C_\alpha$ is in t -2, and there is a crop in $C_S$ in t -2, then $w^t_{rch}$ = 1.

Finally, constraints (20) and (21) are used to activate the variables related to the 2 rotations. More specifically, the constraints

- **(20)** impose that if $c \in C_\beta$ is grown in t = 3, a crop in $C_\alpha$ is in t -2, and there is no crop in Cs in t -1, then $y_{rch}$ = 1;
- **(21)** establish that if c 6 $C_\beta$ is grown in t = 2, and a crop in $C_\alpha$ is in t -1, then $y_{rch}$ = 1.

It is possible to extend the method to the case of scenarios of farmers observing the CAP regulation by defining additional constraints.
The diversification constraints can be written as.

$$\sum_{h\in H} s_h x^t_{ch} \leq 0.75 \sum_{h\in H} s_h, \forall c \in C, \forall t \in T_o. \tag{22}$$

and stipulate that at least two different annual or first-half crops must be grown each year, i.e., in each odd-numbered period, and that no crop may be allocated to more than 75 percent of the farmland if the farm has $10 \div 30$ hectares. Since one crop is assumed to be allocated to each odd-numbered period, constraints (22) also imply that at least two crops will be grown in each year, an additional requirement of the CAP.

In addition, denoting all legumes as $C_{leg}$, the following constraints apply for farmland with more than 30 hectares:

$$\sum_{c\in C_{leg}} \sum_{h\in H} s_h x^t_{ch} \geq 0.05 \sum_{h\in H} s_h, \forall t \in T_o \tag{23}$$

$$\sum_{h\in H} s_h(x^t_{c_1 h} + x^t_{c_2 h}) \leq 0.95 \sum_{h\in H} s_h, \forall c_1, c_2 \in C, c_1 \neq c_2, \forall t \in T_o \tag{24}$$

Constraints (24) stipulate that the two most cultivated crops cannot exceed 95 percent of the agricultural area each year. Constraints (23) impose a minimum of 5 percent of the entire area to be cultivated with legumes each year.

An extension of the method is also possible to the case of farmer scenarios that also observe private supply chain initiatives, such as the aforementioned Carta del Mulino, where the acronym "CdM" identifies the set of crops of interest covered by that initiative, typically wheat. The three types of constraints, i.e., greening, diversification and repetition, contemplated by such an initiative may refer to specific cases, characterized by the set of even-numbered periods assigned to second-semester crops. For example,

- denoting by $C_{leg}$ and $C_{oil}$ the sets of leguminous and oilseed crops, respectively, and by $C_L = C \cup C_{legoil}$, the greening constraints related to the case where a CdM crop is assigned to period t and second-semester crops are grown in t +1 and t +3, which dictate that at least one crop in $C_L$ is assigned on h from period t +1 to t +4, can be written:

$$\sum_{i\in C_l} \sum_{q=t+1}^{t+4} x^q_{ih} \geq x^t_{ch} + \sum_{i\in C_s} x^{t+1}_{ih} + \sum_{i\in C_s} x^{t+3}_{ih} - 2, \forall c \in C_{CdM}, \forall h \in H, \forall t \in T_o. \tag{25}$$

- in the case of a CdM crop v assigned to plot h in the odd period t and a second-semester crop is assigned in t +1, and where, however, no second-semester crop is assigned in t +3 and t +5. For the planting periods for the four successive crops following v are t +1, t +2, t +4, t +6, CdM diversification constraints can be written that state that, for each crop c E C, crops v and c cannot be assigned in more than 3 periods in {t +1, t +2, t +4, t +6}, allowing the assignment of a crop other than v and c in these periods, in the form

$$\sum_{i\in\{c,v\}} (x^{t+1}_{ih} + x^{t+2}_{ih} + x^{t+4}_{ih} + x^{t+6}_{ih}) \leq 3 + (1 - x^t_{vh}) + (1 - \sum_{i\in C_s} x^{t+1}_{ih}) + \sum_{c\in C_s} x^{t+3}_{ih} + \sum_{i\in C_s} x^{t+5}_{ih} \forall v \in C_{CdM}, c \in C, h \in H, t \in T_o. \tag{26}$$

- denoting by CR the set of crops subject to the repetition constraints, and by $\Omega$ the set of all triples {t1,t2,t3} from three consecutive periods selected among the planting periods considered in each constraint, i.e., {t, t +1, t +2, t +4, t +6}, in the case where a CdM crop v is assigned to plot h in period t and where second-semester crops are grown in t + 1, but not in t + 3 and t + 5, repetition constraints can be written that dictate that CR crops can be repeated at most once in the sowing periods t, t + 1, t + 2, t + 4, t + 6, called repetition constraints having the form:

$$\sum_{c\in CR} (x^{t1}_{ch} + x^{t2}_{ch} + x^{t3}_{ch}) \leq 2 + (1 - \sum_{i\in C_s} x^{t+1}_{ih}) + \sum_{c\in C_s} x^{t+3}_{ih} + \sum_{i\in C_s} x^{t+5}_{ih} + (1 - x^t_{vh}) \forall v \in C_{CdM}, \forall h \in H, \forall t \in T_o, \forall\{t_1, t_2, t_3\} \in \Omega \tag{27}$$

The actual data used for the test campaign in this study were collected from a panel of Italian farms involved in the CdM initiative mentioned above, promoted by the Barilla Group in collaboration with WWF Italy, University of Bologna, University of Tuscia and Open Fields. The farms were identified in the Italian provinces with the largest area under soft wheat cultivation for the year 2018, compared to the total arable land involved in crop rotation. A total of 23 farms were selected, ranging in area from 19 to 229 hectares. In all cases, the land is homogeneous and the farmland is assumed to be divided into homogeneous plots of 1 hectare each. In the experimental campaign, the set of C crops considered for each farm includes crops already grown during the data collection years and other crops that could potentially be grown. The number of crops available for each farm ranges from 5 to 10. Details of each case, in terms of the number of crops considered and the number of hectares of arable land, are given in columns 1-3 of Table 1.

Since the actual data collected from farms include crops already planned during 2018, two different sets of experiments were conducted for the scenario that takes into account the constraints under the CAP and the scenario that additionally considers the constraints of the CdM supply chain initiative, referred to as Set 1 and Set 2 below. In Set 1, crop planning decisions are made only from the second year onward, keeping the first-year planning fixed based on actual data. In fact, the planting plan for the first year is set and declared by farmers in order to meet CAP regulations and adhere to the CdM initiative. In Set 2, the first year is also included in the crop planning decision-making process.

Analysis of the "Used Agricultural Area" (UAA) of farms showed differences in terms of productive specialization of arable land. These differences are due to the different growing areas and cultivation techniques adopted. All farms specialize in grain production such as wheat and corn, but all have a legume crop or an oil crop. However, the distribution of cultivated areas within the farms is not uniform.

Official data sources were used to reconstruct, for each farm, the yields obtained from the cultivation of arable crops with available crops. Specifically, the yields were determined on the basis of the National Agricultural Information System [28]. This system records all crop yields in Italy for each year and for each municipality.

The results of the test campaign on the previously described models and real cases are now presented. The experiments were performed using the Gurobi optimizer version 9.0.1 on a 2, 5 GHz Quad-Core computer equipped with 16 GB of RAM. Specifically, all real-world cases were solved in the three problem reference scenarios. The objective of the experimental campaign is to evaluate the ability of the proposed models to solve real-world cases.

A planning horizon of five years was considered in all cases. Thus, T ={1, 2, ..., 10}. In Set 1, the first-year crop planning was already given and set based on the actual data. Recall that, in experiments, first-year crop planning in the Pure Farmer scenario is always included in the decision-making process, i.e., not given.

Table 1 shows the results of the scenario of farmers not subject to pure special regulations and those of Set 1 for the scenarios taking into account CAP constraints and CdM constraints. Columns 1, 2 and 3 of the table report the case data: id, number of hectares and number of crops on each farm, respectively. Columns 4-6, 7-10 and 11-12 report the results for the three scenarios of the problem, i.e., pure farmer, i.e., subject only to agronomic constraints; CAP farmer, following the rules of the Common Agricultural Policy; and CAP+SVC farmer, subject to CAP and Carta del Mulino regulations. For each scenario, the value of the optimal solution, called "Value," the calculation time (in seconds) and the number of Branch & Bound nodes explored by Gurobi are given. In addition, for the PAC and PAC+SVC scenarios, the yield increments (in %) compared to the pure farmer are also reported. These increments are given as $\Delta$(P-C) and $\Delta$(P-SVC) and calculated as (ValuePAC - ValuePure)/ValuePure $\times$100 and (ValuePAC+SVC - ValuePure)/ValuePure $\times$100, respectively.

In Table 1, the cases are sorted by increasing number of hectares, from 19 to 229 hectares. Note that the number of available crops does not change much among farms, varying from 5 to 10, implying that the size of the individual case is mainly determined by the number of hectares. The last row of the table shows the average values for all cases.

In Table 1, the comparison of the "Value" (i.e., yield) of the three scenarios and the yield increases $\Delta$(P-C) and $\Delta$(P-SVC) shows that CAP and CAP+SVC achieve higher yields than the pure farmer. Note that, compared with the pure farmer, the yields achieved in the scenario with PAC constraints and the scenario with PAC and CdM constraints are on average 73.5 percent and 74.5 percent higher in Group 1.

As for calculation time, it generally increases with the number of hectares, although there are some exceptions that may depend on the particular structure of some cases. On average, the calculation time increases by 222 percent from the scenario with no constraints other than agronomic constraints to the scenario with CAP constraints and by an additional 40 percent in the case of the scenario with CAP and CdM constraints. These increases are likely due to the increased number of constraints added. As expected, there is also a general increase in the number of nodes explored by the Branch & Bound procedure performed by Gurobi. The maximum computation time was recorded on the "EMR BO2" case: The scenario with PAC and CdM constraints is solved in about 1 minute, while the PAC and Pure Farmer scenarios take about 50 and 14 seconds, respectively. These computation times are reasonable and demonstrate the good ability of the models to solve this type of problem for real cases.

Table 2 shows the results of the Set 2 experiments on the scenarios with CAP constraints and with CAP and CdM constraints. To simplify the reading, the results of the scenario with only agronomic constraints already reported in Table 1 are also shown. On the one hand, these results allow us to assess the benefits of full adherence to sustainability initiatives. In fact, since the first year is included in the decision-making process, the actual convenience of adherence can be established. On the other hand, the results of Set 2 allow us to assess the additional computational effort required

17

to solve larger cases. As expected, the values of the target solution i.e., the yields in Set 2 are higher than in Set 1 because the problem is less constrained, the first year being included in the decision process, and not provided as input. Moreover, as shown by the values of ∆(P-C) and ∆(P-SVC), in Set 2 the scenarios with CAP constraints and with CAP and CdM constraints achieve yields that are on average 83, 9 percent and 84, 6 percent higher than those obtained with the pure farmer scenario. These results suggest that optimization models can help farmers increase their yields when trying to adhere to sustainability programs.

The computation times of scenarios with PAC constraints and with PAC and CdM constraints in Set 2 are on average about 50 and 76 seconds longer than those of the same scenarios in Group 1. However, all cases in Set 2 are optimally solved with maximum times of less than 262 and 365 seconds, respectively.

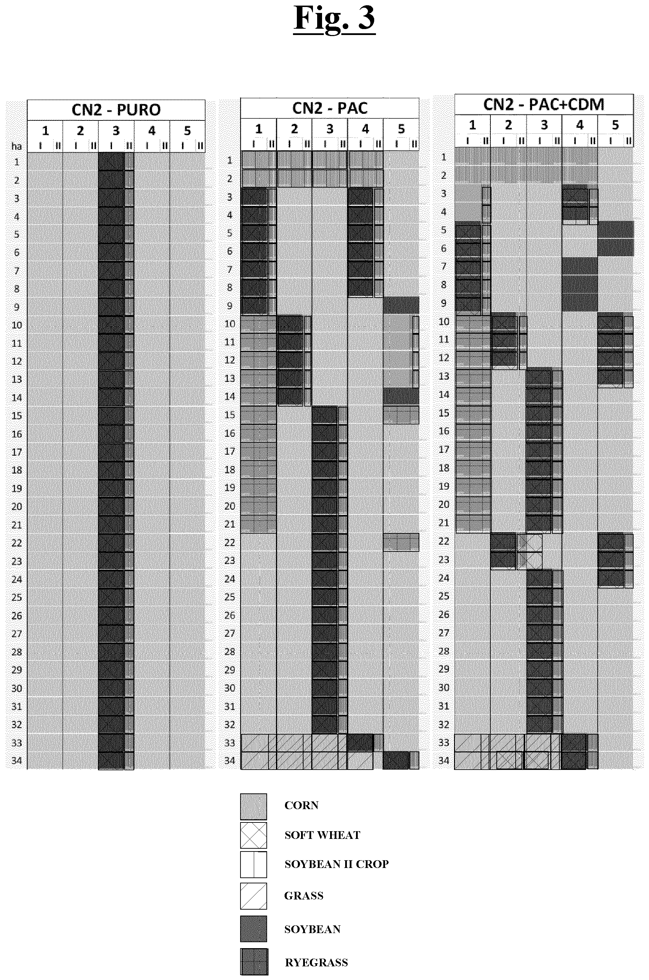

In conclusion, the models performed well on real cases, so they could be advantageously incorporated into a decision support tool that can be used by farmers to plan production and by regulators to calibrate sustainability programs. As an example, Figure 3 shows the optimal cropping sequences on each hectare in the three scenarios for two cases referring to land in the province of Cuneo (CN) and the province of Ferrara (FE), respectively. For each scenario, hectares are shown on the x-axis and periods are shown on the y-axis (where "I" and "II" are the first and second periods of each of the five years). The color of each block is related to a specific crop, as indicated in the legend.

Figure 3 highlights the main differences between the three scenarios. The pattern that characterizes the scenario with only agronomic constraints, in the upper part of the figure, is the monoculture pattern that can be observed throughout the planning horizon: in each period, the entire land is cultivated with the same crop. In particular, the land is devoted mainly to higher-income crops such as soft wheat and corn. However, in the third year, the land is cultivated with a first-half crop, i.e., soft wheat, and a second-half crop, i.e., second-crop soybean, which is an improving crop so as to increase soil fertility. The scenario with CAP constraints, in the center of the figure is characterized, in particular, by crop diversification constraints for each year, as the farm has more than 30 hectares of land, and is therefore required to grow at least three different crops in each period. The presence of cereals, corn and soft wheat, is still high, but it is no longer possible to grow only corn or wheat each year. In particular, the presence of soft wheat is higher, and this crop is always followed by second-crop soybean, which, being an improving crop, plays a key role in virtuous crop rotation planning. Therefore, the introduction of diversification within individual periods also has a positive impact on rotation patterns on individual hectares. In the scenario with CAP and SVC constraints, at the bottom of the figure, soft wheat is enhanced by providing additional diversification constraints on individual plots over the years, whereby other crops and legumes must be grown after soft wheat. In fact, in the solution, a more diversified pattern can be seen on the acres, with greater use of annual soybean, which is a leguminous and improving crop.

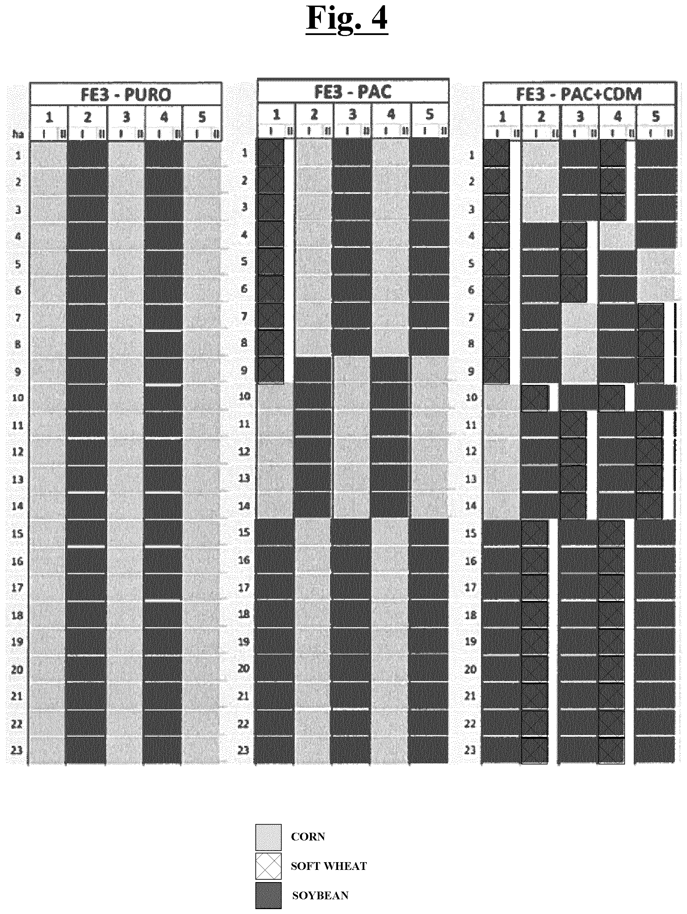

In Figure 4, the pure farmer scenario shows a monoculture result. However, a virtuous crop rotation based on alternating corn and soybean can be observed over the years. The CAP scenario is characterized by the introduction of crop diversification over the years, involving three crops as the greening constraints rule requires. Thus we find a high presence of soybeans, more than 25 percent, and a crop rotation based on the succession of renewing and depleting crops, such as corn; soybeans; and soft wheat. In the PAC+SVC scenario we find soft wheat CdM cultivation for all five years. Thus we can observe a good crop rotation based on the succession of depleting, renewing and improving crops.

The decision problem of crop planning in sustainable agriculture that takes into account the benefits of crop rotation in different growing seasons is considered, and a rigorous characterization of the problem is provided. A flow approach on polynomial minimum cost networks is proposed for special cases. Integer linear programming models that include all features of the problem for the case where the rotation is based on sequences of k = 3 crops were developed and tested on real data.

An experimental campaign on real-world cases demonstrates that the proposed approaches could be incorporated into a decision-support tool that can be used in practice by farmers to plan production and assess the desirability of adhering to sustainability initiatives.

– Table 1 –

## Results of Test Group 1

| Instance | | | Pure Farmer | | | CAP Farmer | | | | CAP+SVC Farmer | | | |
|---|---|---|---|---|---|---|---|---|---|---|---|---|---|
| Id | # Hectares | # Crops | Value | Time | B&B nodes | Value | Time | $\Delta(P-C)(\%)$ | B&B nodes | Value | Time | $\Delta(P-SVC)(\%)$ | B&B nodes |
| PIE_TO1 | 19 | 5 | 78953.93 | 0.27 | 1 | 106746.82 | 0.47 | 35.20 | 1 | 107852.47 | 0.49 | 36.60 | 1 |
| EMR_FE3 | 23 | 7 | 89596.04 | 0.41 | 1 | 136005.36 | 0.36 | 51.80 | 1 | 140252.79 | 0.30 | 56.54 | 1 |
| EMR_FE4 | 27 | 9 | 102535.2 | 4.68 | 428 | 171966.34 | 6.11 | 67.71 | 3023 | 177139.09 | 2.93 | 72.76 | 1051 |
| EMR_PR1 | 29 | 10 | 198626.22 | 0.53 | 1 | 165290.27 | 0.85 | -16.78 | 1 | 166551.05 | 1.06 | -16.15 | 1 |
| PIE_CN2 | 34 | 10 | 103718.36 | 0.47 | 1 | 175718.9 | 0.96 | 69.42 | 1 | 177950.46 | 0.67 | 71.57 | 1 |
| VEN_RO1 | 49 | 6 | 70545.3 | 0.57 | 1 | 186722.88 | 3.68 | 164.69 | 1520 | 189916.02 | 6.81 | 169.21 | 2428 |
| LMB_MI2 | 51 | 7 | 136158.78 | 0.44 | 1 | 289198.29 | 1.62 | 112.40 | 102 | 289967.38 | 8.03 | 112.96 | 4551 |
| LMB_MI1 | 53 | 8 | 103948.9 | 0.46 | 1 | 256200.01 | 0.83 | 146.47 | 32 | 257995.15 | 0.96 | 148.19 | 32 |
| PIE_AL3 | 54 | 8 | 127342.8 | 0.74 | 1 | 254348.29 | 12.12 | 99.74 | 2457 | 260248.43 | 7.64 | 104.37 | 1820 |
| PIE_CN1 | 62 | 7 | 272821.7 | 0.48 | 1 | 502097.02 | 3.17 | 84.04 | 1 | 456235.65 | 1.68 | 67.23 | 1 |
| LMB_MN2 | 66 | 9 | 210945.24 | 9.78 | 2910 | 410982.3 | 8.66 | 94.83 | 3037 | 418645 | 12.31 | 98.46 | 1501 |
| EMR_BO3 | 72 | 7 | 186914.88 | 0.54 | 1 | 340864.76 | 1.33 | 82.36 | 24 | 347632.28 | 1.19 | 85.98 | 20 |
| PIE_AL4 | 84 | 5 | 289413.6 | 0.40 | 1 | 398178.06 | 1.41 | 37.58 | 1 | 392440.63 | 1.63 | 35.60 | 1 |
| LMB_MN3 | 84 | 10 | 1187961.57 | 1.14 | 1 | 1412452.51 | 7.34 | 18.90 | 302 | 1418220.35 | 6.76 | 19.38 | 1 |
| LMB_MN1 | 86 | 10 | 984338.56 | 1.68 | 1 | 1085012.45 | 1.73 | 10.23 | 1 | 1092714.29 | 1.72 | 11.01 | 1 |
| EMR_FE2 | 89 | 9 | 293788.11 | 0.77 | 1 | 454837.92 | 10.15 | 54.82 | 1965 | 465995.281 | 29.21 | 58.62 | 1645 |
| PIE_AL2 | 120 | 7 | 607236 | 1.26 | 1 | 1250272.16 | 6.08 | 105.90 | 1 | 1256405.84 | 4.01 | 106.91 | 1 |
| VEN_RO2 | 134 | 8 | 2784483.82 | 0.81 | 1 | 2701647.35 | 16.10 | -2.97 | 9901 | 2702264.75 | 15.57 | -2.95 | 6916 |
| PIE_AL1 | 154 | 10 | 1141090.72 | 2.52 | 1 | 1587527.65 | 17.78 | 39.12 | 1 | 1588214.07 | 11.71 | 39.18 | 13 |
| EMR_BO1 | 161 | 10 | 494902.73 | 24.68 | 2326 | 1082081.88 | 25.76 | 118.65 | 4016 | 1086159.58 | 38.81 | 119.47 | 1753 |
| EMR_FE1 | 177 | 9 | 681327.87 | 1.42 | 1 | 1089875.38 | 40.59 | 59.96 | 2409 | 1093902.78 | 32.55 | 60.55 | 2123 |
| VEN_VE1 | 211 | 7 | 819954.44 | 2.20 | 1 | 1666298.71 | 6.77 | 103.22 | 18 | 1669041.69 | 7.28 | 103.55 | 1 |
| EMR_BO2 | 229 | 10 | 673816.47 | 14.29 | 135 | 1701880.12 | 53.17 | 152.57 | 1523 | 1721257.04 | 61.87 | 155.45 | 1706 |
| | | Average | 506105.27 | 3.07 | 252.96 | 757661.11 | 9.87 | 73.47 | 1319.04 | 759869.66 | 11.10 | 74.54 | 1111.70 |

– Table 2 –

## Results of Test Group 2

| Instance | | | Pure Farmer | | | CAP Farmer | | | | CAP+SVC Farmer | | | |
|---|---|---|---|---|---|---|---|---|---|---|---|---|---|
| Id | # Hectares | # Crops | Value | Time | B&B nodes | Value | Time | $\Delta(P-C)(\%)$ | B&B nodes | Value | Time | $\Delta(P-SVC)(\%)$ | B&B nodes |
| PIE_TO1 | 19 | 5 | 78953.93 | 0.27 | 1 | 114458.93 | 0.42 | 44.97 | 1 | 114458.93 | 0.43 | 44.97 | 1 |
| EMR_FE3 | 23 | 7 | 89596.04 | 0.41 | 1 | 137409.17 | 0.43 | 53.37 | 1 | 140463.11 | 0.39 | 56.77 | 1 |
| EMR_FE4 | 27 | 9 | 102535.20 | 4.68 | 428 | 178211.10 | 9.97 | 73.80 | 3014 | 183513.55 | 6.61 | 78.98 | 1094 |
| EMR_PR1 | 29 | 10 | 198626.22 | 0.53 | 1 | 216608.02 | 3.05 | 9.05 | 13 | 216814.66 | 7.73 | 9.16 | 1529 |
| PIE_CN2 | 34 | 10 | 103718.36 | 0.47 | 1 | 185834.70 | 2.65 | 79.17 | 1 | 187871.70 | 3.14 | 81.14 | 87 |
| VEN_RO1 | 49 | 6 | 70545.30 | 0.57 | 1 | 195225.70 | 8.39 | 176.74 | 1879 | 195225.70 | 53.40 | 176.74 | 44368 |
| LMB_MI2 | 51 | 7 | 136158.78 | 0.44 | 1 | 295682.29 | 5.02 | 117.16 | 868 | 295682.29 | 14.38 | 117.16 | 3140 |
| LMB_MI1 | 53 | 8 | 103948.90 | 0.46 | 1 | 276281.55 | 9.02 | 165.79 | 4229 | 276292.83 | 51.10 | 165.80 | 42575 |
| PIE_AL3 | 54 | 8 | 127342.80 | 0.74 | 1 | 260415.19 | 19.14 | 104.50 | 2156 | 266285.59 | 44.04 | 109.11 | 16985 |
| PIE_CN1 | 62 | 7 | 272821.70 | 0.48 | 1 | 528035.50 | 4.65 | 93.55 | 653 | 491212.14 | 5.64 | 80.05 | 1 |
| LMB_MN2 | 66 | 9 | 210945.24 | 9.78 | 2910 | 417575.48 | 27.56 | 97.95 | 8560 | 426448.08 | 169.26 | 102.16 | 73733 |
| EMR_BO3 | 72 | 7 | 186914.88 | 0.54 | 1 | 351828.16 | 2.66 | 88.23 | 55 | 353861.36 | 2.98 | 89.32 | 13 |
| PIE_AL4 | 84 | 5 | 289413.60 | 0.40 | 1 | 423140.48 | 2.38 | 46.21 | 1 | 428068.96 | 1.85 | 47.91 | 1 |
| LMB_MN3 | 84 | 10 | 1187961.57 | 1.14 | 1 | 1587311.80 | 48.92 | 33.62 | 4172 | 1589201.22 | 90.01 | 33.78 | 6198 |
| LMB_MN1 | 86 | 10 | 984338.56 | 1.68 | 1 | 1226554.67 | 9.36 | 24.61 | 10 | 1233986.27 | 11.13 | 25.36 | 1 |
| EMR_FE2 | 89 | 9 | 293788.11 | 0.77 | 1 | 469323.98 | 12.29 | 59.75 | 705 | 479512.94 | 138.08 | 63.22 | 3589 |
| PIE_AL2 | 120 | 7 | 607236.00 | 1.26 | 1 | 1283437.44 | 47.57 | 111.36 | 7493 | 1282917.12 | 60.18 | 111.27 | 1626 |
| VEN_RO2 | 134 | 8 | 2784483.82 | 0.81 | 1 | 2931218.51 | 20.18 | 5.27 | 1674 | 2931218.51 | 15.30 | 5.27 | 820 |
| PIE_AL1 | 154 | 10 | 1141090.72 | 2.52 | 1 | 1778159.32 | 147.70 | 55.83 | 8165 | 1778159.32 | 128.36 | 55.83 | 5140 |
| EMR_BO1 | 161 | 10 | 494902.73 | 24.68 | 2326 | 1143805.91 | 247.82 | 131.12 | 1749 | 1147046.18 | 364.61 | 131.77 | 9321 |
| EMR_FE1 | 177 | 9 | 681327.87 | 1.42 | 1 | 1130892.09 | 118.79 | 65.98 | 1644 | 1130892.09 | 115.01 | 65.98 | 1620 |
| VEN_VE1 | 211 | 7 | 819954.44 | 2.20 | 1 | 1856487.73 | 124.17 | 126.41 | 1536 | 1859614.81 | 106.02 | 126.79 | 1518 |
| EMR_BO2 | 229 | 10 | 673816.47 | 14.29 | 135 | 1786250.55 | 261.21 | 165.09 | 2995 | 1806878.75 | 357.50 | 168.16 | 1748 |
| | | Average | 506105.27 | 3.07 | 252.96 | 816267.32 | 49.28 | 83.89 | 2242.34783 | 818070.70 | 75.96 | 84.64 | 9352.57 |

The models described can also be used by regulators to calibrate the incentives of their sustainability initiatives. Policy makers can use the results to assess the appropriateness of rules for transitioning farms to sustainability. Indeed, comparing yields between different scenarios can facilitate the design of appropriate business tools by agribusiness chain actors aimed at pushing farmers toward more sustainable farmland management.

Furthermore, although the approaches presented relate to CAP and CdM constraints, they can be extended and adapted for ex-ante evaluation and monitoring activities, related to safeguarding soil fertility and productivity of agricultural systems, in other regions and soil-climate contexts. To this end, data collected for fairly homogeneous areas by individual states and/or international government agencies can be used to identify "optimal" crop rotation patterns based on local socio-economic and soil and climate characteristics.

The preceding description of embodiment forms of the invention, and examples thereof, is capable of showing the invention from the conceptual point of view so that others, using the known technique, will be able to modify and/or adapt in various applications such embodiments without further research and without departing from the inventive concept, and, therefore, it is understood that such adaptations and modifications will be regarded as equivalent to the embodiments described. The means and materials for realizing the various functions may be of various kinds without departing from the scope of the invention. It is understood that the expressions or terminology used are for descriptive purposes only and, therefore, not limiting.

## Claims

1.  A method of cultivating at least one plot h of a set of plots H of land in a predetermined planning time T, said method comprising the steps of planning rotations of said crops by obtaining a rotation plan, and executing said crops according to said rotation plan, wherein said planning step comprises the steps of:

    - for said or each plot h, determination of a set C of acceptable crops c for said plot;
    - for said or each plot h, definition of a succession of p planting periods t until said planning time T;
    - definition of a plurality of desired crops c; among said acceptable crops;
    - definition of a plurality of permissible sequences $\sigma$ of said desired crops $c_i$ to be assigned, according to respective predetermined time orders, to said or each plot h, said permissible sequences $\sigma$ being determined in compliance with agronomic constraints comprising:

        - on each plot, uniqueness of crop c to be allocated in each sowing period t;
        - minimum and maximum area allocated to each crop c in each planting period t;

    - determination, for each of said eligible sequences $\sigma$, and for all p sowing periods t of said planning time T, of a total yield $\pi_h$ for said or each plot h, obtained as the sum of seasonal yields Yn in said sowing periods t, according to the formula

    $$\pi_h(\sigma) = \sum_{c \in \sigma} Y_h(\langle \sigma_k(c) \rangle, t(c)), \qquad (1)$$

    wherein each of these seasonal yields in a planting period t is calculated based on a maximum number of crops k that includes:

        - the crop assigned in said planting period t, and
        - the k-1 crops assigned, according to each of these sequences, in a corresponding k-1 number of consecutively preceding earlier planting periods of said planting period,

    where k≥2;
    - choice, from among said allowable sequences, of a planning sequence for which said total yield $\pi_h$ has a maximum value, said planning sequence providing said rotation plan.

2.  The method according to claim 1, in which

    - said desired crops include winter or summer seasonal crops of duration $d_c$ and annual crops of duration $2d_c$,
    - said planting periods include a plurality of odd winter planting periods alternating with a plurality of even summer planting periods, and
    - said permissible $\sigma$ sequences are determined in compliance with additional agronomic constraints including at least one constraint selected among:

- assignment of a winter crop or an annual crop to each of said odd/even planting periods, where said annual crop is also assigned to an odd/even planting period consecutive to a respective odd/even planting period of assignment, or

- if an annual crop c is assigned to a planting period t but not to the immediately preceding period t -1, assignment of said annual crop also to the periods {t, t +1, ..., 2dc -2}, so as to respect the said duration $2d_c$ of said annual crop.

**3.** The method according to claim 1, wherein said $\sigma$-test sequences are determined in compliance with an additional agronomic constraint consisting of a maximum number of consecutive repetitions, in the same plot, of one or more crops of the same homogeneous replanting group, said maximum number being equal to a maximum replanting value characteristic of said group.

**4.** The method according to claim 1, where k is selected among 2, 3 and 4.

**5.** The method according to claim 1, where k =3.

**6.** The method according to claim 2, where k =2 and said total yield $\pi_h$ for each plot h is expressed by the formula

$$\pi_h(\sigma) = Y_h(\langle c_1 \rangle, 1) + Y_h(\langle c_1, c_2 \rangle, 3) + Y_h(\langle c_2, c_1 \rangle, 5) + Y_h(\langle c_1, c_2 \rangle, 7) + Y_h(\langle c_2, c_1 \rangle, 9) + Y_h(\langle c_1, c_2 \rangle, 11) + ....$$

wherein each additional addend refers to an additional odd-seeded period, and contains a yield in that odd-seeded period dependent on a portion of the sequence of $\sigma$ containing the assigned crop c in that additional period and the k-1=1 crops immediately preceding c.

**7.** The method according to claim 2, where k =3 and said total yield $\pi_h$ for each plot h is expressed by the formula

$$\pi_h(\sigma) = Y_h(\langle c_1 \rangle, 1) + Y_h(\langle c_1, c_2 \rangle, 3) + Y_h(\langle c_1, c_2, c_3 \rangle, 5) + Y_h(\langle c_2, c_3, c_4 \rangle, 7) +$$
$$Y_h(\langle c_3, c_4, c_1 \rangle, 9) + Y_h(\langle c_4, c_1, c_2 \rangle, 11) + .....$$

wherein each additional addend refers to an additional odd-numbered planting period, and contains a yield in that odd-numbered planting period dependent on a portion of the sequence of $\sigma$ containing the assigned crop c in that additional period and the k-1=2 crops immediately preceding c.

**8.** The method according to claim 2, where k =4 and said total yield $\pi_h$ for each plot h is expressed by the formula

$$\pi_h(\sigma) = Y_h(\langle c_1 \rangle, 1) + Y_h(\langle c_1, c_2 \rangle, 3) + Y_h(\langle c_1, c_2, c_3 \rangle, 5) + Y_h(\langle c_1, c_2, c_3, c_4 \rangle, 7)$$
$$+ Y_h(\langle c_2, c_3, c_4, c_5 \rangle, 9) + Y_h(\langle c_3, c_4, c_5, c_1 \rangle, 11) + .....$$

wherein each additional addend refers to an additional odd-numbered planting period, and contains a yield in that odd-numbered planting period dependent on a portion of the sequence of $\sigma$ containing the assigned crop c in that additional period and the k-1=3 crops immediately preceding c.

**9.** The method as per claim 1, wherein said step of selecting is performed as a minimum-cost network flow problem between a source node and a demand node of a graph (G).

**10.** The method as per claim 1, wherein said choice step is performed as an integer linear programming problem.

# Fig. 1

## PLOTS

EP 4 459 523 A1

# Fig. 2

# Fig. 3

# Fig. 4

CORN

SOFT WHEAT

SOYBEAN

Europäisches
Patentamt

European
Patent Office

Office européen
des brevets

# EUROPEAN SEARCH REPORT

**Application Number**

EP 24 17 3966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DOS SANTOS L M R ET AL: "Sustainable vegetable crop supply problem", EUROPEAN JOURNAL OF OPERATIONAL RESEARCH, ELSEVIER, AMSTERDAM, NL, vol. 204, no. 3, 3 December 2009 (2009-12-03), pages 639-647, XP026881797, ISSN: 0377-2217, DOI: 10.1016/J.EJOR.2009.11.026 [retrieved on 2009-12-03] * the whole document * | 1-10 | INV. G06Q10/04 A01B79/00 G06Q50/02 |
| X | FIKRY I ET AL: "A New Mathematical Model for the Deterministic Crop Rotation Planning Problem", 2019 IEEE INTERNATIONAL CONFERENCE ON INDUSTRIAL ENGINEERING AND ENGINEERING MANAGEMENT (IEEM), IEEE, 15 December 2019 (2019-12-15), pages 314-318, XP033701011, DOI: 10.1109/IEEM44572.2019.8978672 * the whole document * | 1-10 | |
| X | FILIPPI CARLO ET AL: "Mixed integer linear programming models for optimal crop selection", COMPUTERS AND OPERATIONS RESEARCH, OXFORD, GB, vol. 81, 8 December 2016 (2016-12-08), pages 26-39, XP029907476, ISSN: 0305-0548, DOI: 10.1016/J.COR.2016.12.004 * page 1, line 1 - page 35, line 18 * | 1-10 | **TECHNICAL FIELDS SEARCHED (IPC)** G06Q A01B |

The present search report has been drawn up for all claims

| Place of search | Date of completion of the search | Examiner |
|---|---|---|
| Munich | 18 September 2024 | Pastore, Edoardo |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110276336 A1
- EP 3996013 A1
- WO 2022146332 A1
- CN 108805349 A
- US 2021257113 A1

**Non-patent literature cited in the description**

- **HANEVELD ; STEGEMAN.** Crop succession requirements in agricultural production planning. *European Journal of Operational Research,* 2005, vol. 166 (2), 406-429
- **ALFANDARI et al.** A MIP flow model for crop-rotation planning in a context of sustainable forest development. *Annals of Operations Research,* 2011, vol. 190 (1), 149-164
- A branch-and-price-and-cut approach for sustainable crop rotation planning. *European Journal of Operational Research,* 2015, vol. 241 (3), 872-879
- **SANTOS et al.** A branch-price-and-cut method for the vegetable crop rotation scheduling problem with minimal plot sizes. *European Journal of Operational Research,* 2015, vol. 245 (2), 581-590
- **SANTOS, COSTA et al.** Sustainable vegetable crop supply problem. *European Journal of Operational Research,* 2010, vol. 204 (3), 639-647
- **SANTOS, MICHELON et al.** Crop rotation scheduling with adjacency constraints. *Annals OR,* 2011, vol. 190, 165-180
- **MUNARI.** Improved mathematical model and bounds for the crop rotation scheduling problem with adjacency constraints. *European Journal of Operational Research,* 2019, vol. 278 (1), 120-135
- **FIKRY et al.** A New Mathematical Model for the Deterministic Crop Rotation Planning Problem. *IEEE Int. Conf. on Ind. Eng. and Eng. Man. (IEEM),* 2019, 314-318
- **BOYABATLI et al.** Crop Planning in Sustainable Agriculture: Dynamic Farmland Allocation in the Presence of Crop Rotation Benefits. *Management Science,* 2019, vol. 65 (5), 2060-2076
- **DETLEFSEN ; JENSEN.** Modeling optimal crop sequences using network flows. *Agricultural Systems,* 2007, vol. 94 (2), 566-572
- **BACHINGER ; ZANDER.** A tool for generating and evaluating crop rotations for organic farming systems. *European Journal of Agronomy,* 2007, vol. 26 (2), 130-143
- **FILIPPI et al.** Mixed integer linear programming models for optimal crop selection. *Computers & Operations Research,* 2017, vol. 81, 26-39